# EUROPEAN PATENT SPECIFICATION

(11) **EP 4 078 068 B1**
(45) Date of publication and mention of the grant of the patent: **02.04.2025**
(21) Application number: 20901085.9
(22) Date of filing: 18.12.2020
(51) Int. Cl.: F41A 1/10, F42B 5/05, B64D 7/06, F41A 19/13, F41A 19/42, F41A 19/58, B64U 101/18, F42B 5/08

(54) **HOVERING FIREARM SYSTEM FOR DRONES AND METHODS OF USE THEREOF**
SCHWEBENDES SCHUSSWAFFENSYSTEM FÜR DROHNEN UND VERFAHREN ZUR VERWENDUNG DAVON
SYSTÈME D'ARME À FEU EN VOL STATIONNAIRE POUR DRONES ET SES PROCÉDÉS D'UTILISATION

(30) Priority: 19.12.2019 IL 27157919
(43) Date of publication of application: 26.10.2022
(73) Proprietor: Next Sniper Ltd., 43665 Raanana (IL)
(72) Inventor: KIPNIS, Boris, 69126 Tel Aviv (IL); GOLAN, Chen, 40696 Ein Vered (IL)
(74) Representative: Kutzenberger Wolff & Partner
(86) International application number: PCT/IL2020/051306
(87) International publication number: WO 2021/124337

(56) References cited:
- EP-A1- 0 100 722
- ES-U- 1 040 269
- GB-A- 130 237
- US-A- 3 771 417
- US-A1- 2014 075 800
- US-A1- 2015 059 566
- US-A1- 2017 198 994
- US-B1- 7 418 896

## Description

### FIELD OF THE INVENTION

The present disclosure relates to firearms and more specific to drone based recoilless firearm systems designed for small man-portable drones, including algorithms for controlling and aiming of the firearm attached to drone and methods to enable the firearm to operate recoilless, while using standard ammunition.

### BACKGROUND

In modern warfare, common, state-of-the-art lightweight drones and unmanned aerial vehicles (UAV) systems are widely used for reconnaissance. Only a small portion of the UAV systems are capable of carrying weapons, whereas these weaponized systems are usually large in size and can be subdivided into 2 main groups: (1) medium-altitude long-endurance UAV (MALE UAV) that can be equipped with several missiles (usually laser guided, for example "Hellfire"); and (2) suicide drones with single explosive head, whereas these weapons are lethal, very expensive and cause extensive collateral damage. Small firearms, on the other hand, have low collateral damage, but are not used with drones because of their high precision aiming requirements and their strong recoil force.

The idea of arming small drones has been around for a few years. In 2012, the U.S. Navy experimented with arming quadcopters with shotguns as counter-sniper weapons, but eventually they halted the project.

"Recoilless rifles" are a type of firearm known in art, but currently not mounted on drones. According to Wikipedia, *"a recoilless rifle, recoilless launcher or recoilless gun is a type of lightweight artillery system that is designed to eject some form of counter-mass such as propellant gas from the rear of the weapon at the moment of firing, creating forward thrust that counteract most of the weapon's recoil."*

All prior art "recoilless" systems are designed for a single shoot and use special purpose ammunition, for high caliber launchers, that were specially developed for that purpose.

The term "lightweight drone", as referred to herein, is a drone that can be carried by foot soldiers.

The idea for using a gun or a sniper rifle attached to a "lightweight drone" is not quite applicable because of the recoil force formed during the shooting, which recoil force is applied to the drone and its components, and thereby pushes the drone far away from its original flying path and completely destabilize the guidance system including the gimbal(s) and the gun. Thereby, making it impossible to fire a second shot at the same target, right after firing the first shot.

Furthermore, when shooting from the air, it is typically required to aim downwards toward a target on the ground. As such, when shooting takes place, a lightweight drone is likely to flip over.

According to "Popular Mechanics" : https://www.popularmechanics.com/military/research/news/a27754/hobby-drone-sniper/, the article "When a Hobby Drone Becomes a Military Snipper" suggests a way of dealing with the firearm recoil by providing a special gimbal platform using some flexible plates.

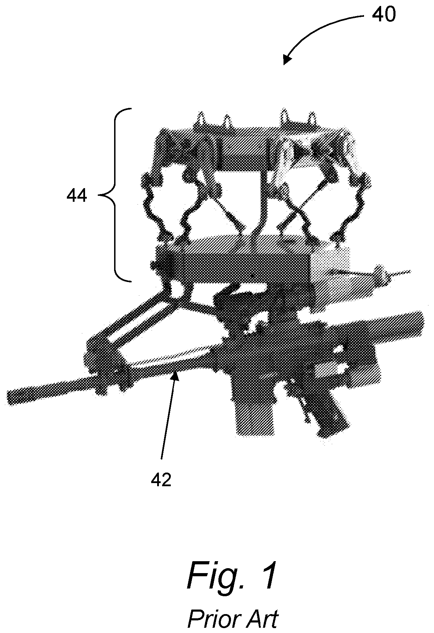

In another article in "Business Insider": http://www.businessinsider.com/a-us-defense-contractor-developed-a-sniper-drone-that-could-lives-2017-8, Duke Robotics Inc., the creators of the Tikad system **40,** as depicted in Fig. 1, say that the Tikad has a unique suppression firing and stabilization solution. The weapon **42** is mounted on a robotic gimbal **44,** which turns in real time, keeping its pointed aim in the desired direction. The recoil is distributed through flexible plates to minimize the overall effect, however, minimizing, but not eliminating, the recoil force.

The current Tikad prototype is complexed weigh around 50 Kilogram, and due to weight problems, it can stay airborne for about 5 minutes. Weapon **42** does not provide escaping that is equal and opposite reaction, and while the efficiency of Tikad system **40** as a gunnery platform remains unproven, it is well known that even in further versions the system is too heavy to be carried by single person or even a number of soldiers, while airtime duration remains very limited.

Successful attempts to couple a recoilless firearm system with a lightweight drone, in particular, without limitations, hovering drones such as quadcopter drones (also referred to herein as "multicopter drones"), are not known in the art. In particular, without limitations, recoilless firearm system for multicopter drones that are configured to shoot standard ammunition.

There is therefore a need, and it would be advantageous to provide "recoilless" firearm systems that fire standard ammunition known in art. Preferably, the system is a lightweight system that can be carried by single person, can be used repeatably and can typically stay in the air for at least 30 minutes.

Further prior art is described in US7418896B1 and ES1040269U.

### SUMMARY

The invention is defined by independent claims 1, 12 and 14. Preferred embodiments are defined by the dependent claims.

The principal intentions of the present disclosure include providing a small, lightweight and mobile air-born robots to meet modem warfare needs. For example, drones that can access any locations by air and have the capacity to carry a firearm that can aim and fire multiple shots, with non-lethal or lethal capabilities. The drone system, including the drone and the firearm, should be a single-man-portable and have long enough operational time to be able to patrol and intercept terror attacks from individuals, military, drones, kites, balloons and the like.

In order to achieve these goals, the firearm system is designed to meet several requirements:
1) The firearm should be small and lightweight and attachable to a coupled man-portable drone.
2) The firearm should be able to operate, during the flight, wherein the firearm must be recoilless, or at least with substantial recoil reduction in order to prevent or at least minimize the effect of the firearm on the drone operation.
3) The firearm should be able to perform continuous shooting and facilitate automatic firing.
4) To reduce operational cost, the firearm system should be able to use standard, off-the-shelf ammunition designed for assault rifles and guns.

It should be noted that although the present disclosure describes several recoilless methods and firearm aiming mechanisms, the overall goal of the present disclosure is to provide a recoilless firearm system, where the firearm is attached to a coupled drone.

According to the teachings of the present disclosure there is provided a recoilless firearm apparatus for firing at least one bullet of a respective standard cartridge, including a front barrel having an inner-barrel-diameter and a rear cartridge-chamber; a disposable firing activator; and a rear discharge opening formed behind the front barrel, aligned with the longitudinal axis of the front barrel. The standard cartridge further includes a casing having an external diameter that is smaller than the rear cartridge-chamber diameter, wherein the casing encloses a sealed inner-casing space that contains gunpowder, and wherein the casing includes a primer.

Upon activating the primer, the primer explodes to thereby detonate the gunpowder, forming propellant gasses inside the cartridge that are directed both forward and backward as follows:
a) forward: firing of the bullet via the front barrel; and
b) backward: pushing, by a recoil force *Fₚ,* the casing, being a counterweight to
the bullet, to thereby eject the casing from the firearm apparatus via the rear discharge opening.

The recoilless firearm apparatus further including a disposable firing pin, wherein the activating of the primer is performed by the firing pin hitting the primer, and wherein the disposable firing pin is ejected with the casing from the firearm apparatus via the rear discharge opening.

The disposable firing activator may be an electric contact configured to transfer electric power from a side located electrode to the primer to thereby activate the primer, wherein the disposable firing activator is ejected with the casing from the firearm apparatus via the rear discharge opening.

The disposable firing activator may be a firing pin, wherein the activating of the primer is performed by the firing pin hitting the primer, and wherein the disposable firing pin is ejected with the casing from the firearm apparatus via the rear discharge opening.

The disposable firing-pin may include: a) a pin-body having a body having a pin-front-end, being an open end, and a pin-rear-end; b) a pin disposed at the pin-front-end; and c) at least one pin-wing disposed at the pin-rear-end.

When in a cocked state, the standard cartridge rear is seated inside the cartridge-chamber and the pin is positioned in safe proximity to the primer. The firing pin is made of rigid materials, wherein the parts of the firing-pin, including the at least one pin-wing, are made of deformable or breakable materials, such that when applying an excess force *Fₑ* onto the at least one pin-wing, the at least one pin-wing deforms or breaks.

Optionally, the disposable firing-pin includes a pin-body having a body having a pin-front-end, being an open end, a frontal-body-section and a rear-body-section having a pin-rear-end with a larger diameter end. The disposable firing-pin may further include a pin disposed at said pin-front-end, wherein the larger diameter of the pin-rear-end is configured to seal the rear discharge opening.

Again, when in a cocked state, the standard cartridge rear is seated inside said cartridge-chamber and the pin is positioned in safe proximity to the primer. The firing pin is made of rigid materials, wherein at least said rear-body-section, including the larger diameter end, is made of deformable or breakable materials, such that when applying an excess force Fₑ onto said firing pin, the firing pin deforms or breaks.

The recoilless firearm apparatus may further include a piped bolt-hammering-unit, having a bolt-front-face and a bolt-rear-face, and includes a body having a bolt-inner-opening formed there within. The bolt-inner-opening is larger than the external diameter of the casing, allowing free longitudinal motion of the casing there inside. The pin-wings have a wing-span that is larger than the bolt-inner-opening, wherein when the firearm is in a cocked state, the bolt-front-face is positioned in safe proximity to the pin-wings. The activating of the primer is performed by applying a unidirectional forward force on the piped bolt-hammering-unit that pushes forward the disposable firing pin and, thereby, the pin activates of the primer.

Upon the activating of the primer by the pin of the disposable firing pin, the formed propellant gasses push the casing and the disposable firing pin backwards by the recoil force *Fₚ,* where *Fₚ >> Fₑ,* thereby upon the pin-wings hitting the bolt-front-face of the piped bolt-hammering-unit, the pin-wings deform or break, and thereby, the casing and the deformed disposable firing pin continue to move through the bolt-inner-opening and eject from the firearm apparatus via the rear discharge opening.

The recoilless firearm apparatus may further include a recoilless-cartridge-assembly, a ribbed bolt-hammering-unit and a unidirectional energy transfer mechanism.

The recoilless-cartridge-assembly includes a standard cartridge and a detonation assembly. The detonation assembly includes a cylindrical-envelope having an inner diameter, an external diameter, a front end and a rear end, wherein the front end operatively faces the front barrel. The detonation assembly further includes a cylindrical-envelope, a rear plug and a disposable firing pin.

Typically, the cylindrical-envelope has an inner diameter, an external diameter, a front end and a rear end, wherein the front end operatively faces said front barrel. The rear plug securely encloses the inner diameter of the rear end of the cylindrical-envelope. The disposable firing pin includes a pin-body, at least one wing having a wing-span diameter, wherein the wing-span diameter is larger than the inner diameter of the cylindrical-envelope, and a pin.

At least one through slits is formed in the cylindrical-envelope, one slit for each respective wing. Each of the slit extends from the front end of the cylindrical-envelope to the rear end of the cylindrical-envelope. The slits segment the cylindrical-envelope into separate peripheral segments, wherein the rear end of each peripheral segment is sloped, starting at a first rear corner at each of the peripheral segment, and ending at the other corner of that peripheral segment and at a predesigned distance from the rear end of the rear plug.

When the detonation assembly is operatively assembled, each slit accommodates the open end of a respective wing, wherein, when the recoilless-cartridge-assembly is operatively assembled, the detonation assembly embraces the primary casing of the primary cartridge unit.

The ribbed bolt-hammering-unit includes a piped body and at least one directing rib. The piped body includes an inner base-opening forming an inner wall, a front face; and a rear face. The at least one directing rib protruding inwardly from the inner wall of the inner base-opening, at a preconfigured location, wherein the at least one directing rib is adapted to operatively engage with the open end of a respective wing.

The unidirectional energy transfer mechanism is designed such that wherein the number of the peripheral segments, the number of the wings, the number of the slits and the number of the directing ribs are equal. The bolt-inner-opening is defined by the tips of the directing ribs. The unidirectional energy transfer mechanism is configured to allow the bolt-hammering-unit to move forward freely, and to controllably block the bolt-hammering-unit from moving backward. The unidirectional energy transfer mechanism is adapted to apply the forward motion of the bolt-hammering-unit. While moving forward, when each of the directing ribs of the bolt-hammering-unit meets the sloped rear ends of a respective peripheral segment. It should be appreciated that any motion limitation mechanism, known in art as a "breechblock locking mechanism", can be used as a unidirectional linear motion to block rearward motion of the bolt-hammer-unit, while in a cocked state.

The method of operating the unidirectional energy transfer mechanism includes the steps of:
a) pivoting the detonation assembly until reaching the respective slits;
b) entering the respective slits until meeting the open end of each of the respective wings that stick out of the cylindrical-envelope; and
c) pushing the firing pin forward towards the primary primer,
wherein upon reaching the primer of the standard cartridge, being disposed inside the rear cartridge-chamber in a cocked state, the pin impacts the primer to thereby causing the primer explosion and detonation of the gunpowder inside the casing.

The recoilless firearm apparatus may further include a recoil compensator that is securely attached to the front barrel, adapted to operatively compensate for the difference in forces *ΔF,* between a recoil force *Fₚ,* and the sum of the excess force *Fₑ,* the weight of the casing and all parts of the firing-pin. The recoil compensator may be a muzzle-brake or a jet nozzle.

In some embodiments, the recoilless firearm apparatus further includes a piped bolt-hammering-unit and a unidirectional energy transfer (being a motion limiting mechanism). The piped bolt-hammering-unit includes a piped body and at least one groove formed in the front face, wherein the. The piped body includes a bolt-inner-opening, wherein the at least one wing has a wing-span diameter, and wherein the wing-span diameter is larger than the inner diameter of the piped body. The piped body further includes an external diameter, a bolt-front-face, and a bolt-rear-face. The at least one groove is adapted to respectively accommodate the at least one wing.

The unidirectional energy transfer is configured to allow the piped hammering-unit to move forward freely, and to controllably block the piped hammering-unit from moving backward.

The unidirectional energy transfer is adapted to apply the forward motion of the piped hammering-unit. While moving forward, the piped hammering-unit is configured to collect the disposable firing-pin, and wherein the at least one wings is seated inside the at least one groove, respectively.

Upon reaching the primary cartridge, being in a cocked state, the pin impacts the primary primer of the primary cartridge to thereby detonate the gunpowder inside the primary casing, forming propellant gasses that are directed forward and backward as follows:
forward: firing of the primary bullet via the front barrel; and
backward: pushing the primary casing and disposable firing pin backward; deforming the at least one wing of the disposable firing pin into the inner opening of the piped hammering-unit; and ejecting the primary casing and the disposable firing pin via the inner opening of the piped hammering-unit, while the unidirectional energy transfer mechanism prevents the piped hammering-unit from moving backward.

Optionally, the disposable firing pin is provided by a band magazine, and wherein a respective the firing pin is dispatched from the band magazine by the moving forward piped hammering-unit.

The unidirectional energy transfer mechanism controls the motion of the bolt-hammering-unit, and wherein the motion may be a linear motion, a rotational motion or a combination thereof.

In some embodiments of the present disclosure, the recoilless firearm apparatus further includes a recoil-prevention mechanism, wherein the recoil-prevention mechanism includes a rear barrel, having the rear discharge opening, and a dual-cartridge firearm magazine. The dual-cartridge firearm magazine is configured to receive the standard cartridge, and a counterweight having a primer activator. the standard cartridge and the secondary cartridge are arranged in a back-to-back configuration.

The primer activator is operatively placed between the primer of the primary cartridge and the counterweight, such that the primer activator is aligned with the primer. The bullet of the primary cartridge is configured to be fired via the front barrel and the secondary cartridge is configured to be fired via the rear barrel. Upon detonation of the primary cartridge and, the generated recoil force pushes the casing and the counterweight rearwardly, to thereby eject the casing and the counterweight from the firearm apparatus via the rear discharge opening.

Optionally, the dual-cartridge firearm magazine is an electronic dual-cartridge firearm magazine having a high voltage module, wherein the primary cartridge is a combat cartridge, and the counterweight is an electronic cartridge, wherein the electronic cartridge includes:
a) a built-in, electric ignition circuit;
b) an electronic ignition heater;
c) a secondary casing;
d) gunpowder;
e) a firing activation unit; and
f) a sealing unit configured to seal the rear side of the electronic cartridge,
wherein the sealing unit that also serves as a counterweight,

Upon receiving an electronic ignition trigger by the high voltage module, the dual-ignition electric circuit is activated to thereby turn on the electronic ignition heater and thereby:
a) detonating the gunpowder disposed inside the electronic cartridge;
b) shifting forward of the electronic cartridge towards the primary casing;
c) detonating the primary primer by the firing activation unit;
d) firing of the primary bullet via the front barrel;
e) ejecting the counterweight via the rear barrel.

It should be appreciated that the sealing unit and the propellant gasses serves as a counterweight to the weight of the primary bullet.

According to the teachings of the present disclosure there is provided a hovering firearm system including a hovering subsystem configured to lift a recoilless firearm apparatus to the air and fly towards a designated target, and a mounting platform, wherein the recoilless firearm is securely attached to the mounting platform. Upon firing the at least one bullet, the remaining residual recoil force allows the hovering firearm system to continue a controlled flight.

Optionally, the platform includes a first gimbal having a carrying face, and wherein the recoilless firearm apparatus is mounted on the first gimbal.

Optionally, the hovering firearm system further includes an electro-optical module having a camera, wherein the camera has an optical line of sight aimed to the target.

Optionally, the electro-optical module is attached to the first gimbal.

Optionally, the hovering firearm system further includes a second gimbal, wherein the second gimbal is independent of the first gimbal, and wherein the electro-optical module is attached to the second gimbal. The second gimbal may be independent of the first gimbal, and optionally, the second gimbal is mounted on the first gimbal.

The optical line of sight may be controllably aligned with the recoilless firearm to thereby facilitate sequential shootings at the target without losing the boresight.

The aligning of the optical line of sight boresight (boresighting) may be either mechanical alignment or electronic boresighting utilizing shift or image crosser motion.

Optionally, the boresighting includes locking of the line of sight on the target, and controllably aligning the longitudinal axis of the front barrel with the optical line of sight of the camera.

Optionally, the boresighting is updated in real-time using ballistic calculations, wind vector calculations or a combination thereof.

According to aspects of the present disclosure, there is provided a bidirectional recoilless firearm apparatus for firing at least one bullet of a respective standard cartridge having a standard caliber. This recoilless firearm includes a front barrel having an inner-barrel-diameter and a rear cartridge-chamber having a rear cartridge-chamber diameter configured to receive the standard cartridge; a disposable firing activator; and a recoil-prevention mechanism, wherein the recoil-prevention mechanism includes a rear barrel, having the rear discharge opening, and a dual-cartridge firearm magazine. The dual-cartridge firearm magazine is configured to receive the standard cartridge, being a primary cartridge, a secondary cartridge, and a dual firing pin unit having a primary pin and a secondary pin. The secondary cartridge includes a secondary sealed casing that includes gunpowder and a secondary primer, wherein the primary cartridge and the secondary cartridge are arranged in a back-to-back configuration.

The dual firing pin unit is operatively placed between the primer of said primary cartridge and the secondary primer, such that the primary pin is aligned with the primer of the primary cartridge and the secondary pin is aligned with the secondary primer. The bullet of the primary cartridge is configured to be fired via the front barrel and the secondary cartridge is configured to be fired via the rear barrel. Upon simultaneous detonation of the primary cartridge and, the recoil force generated by the secondary cartridge cancels the recoil force generated by the primary cartridge.

Optionally, the primary cartridge and the secondary cartridge are of identical type, wherein the front barrel and the rear barrel are not equal in length, and wherein upon simultaneous detonation of the primary cartridge and, the recoil force generated by the secondary cartridge cancels the recoil force generated by the primary cartridge.

Optionally, the recoil-prevention mechanism further includes a recoil compensator, to thereby compensate for inequalities between the recoil forces generated by the primary cartridge and the secondary cartridge.

Optionally, the primary cartridge and the secondary cartridge are not of identical type, wherein the front barrel and the rear barrel are not equal in length. Upon simultaneous detonation of the primary cartridge, the recoil force generated by the secondary cartridge cancels the recoil force generated by the primary cartridge. Preferably, the recoil-prevention mechanism further includes a recoil compensator, to thereby compensate for inequalities between the recoil forces generated by the primary cartridge and the secondary cartridge.

Optionally, the primary cartridge is a combat cartridge, and the secondary cartridge is a dummy cartridge. The recoil compensator may be a muzzle-brake or a jet nozzle.

According to the teachings of the present disclosure there is provided a recoilless-cartridge-assembly including a standard cartridge and a detonation assembly. The detonation assembly includes a cylindrical-envelope having an inner diameter, an external diameter, a front end and a rear end, wherein the front end operatively faces the front barrel. The detonation assembly further includes a cylindrical-envelope, a rear plug and a disposable firing pin.

The rear plug securely encloses the inner diameter of the rear end of the cylindrical-envelope. The disposable firing pin includes a pin-body, at least one wing having a wing-span diameter, wherein the wing-span diameter is larger than the inner diameter of the cylindrical-envelope, and a pin. At least one through slits is formed in the cylindrical-envelope, one slit for each respective wing. Each of the slit extends from the front end of the cylindrical-envelope to the rear end of the cylindrical-envelope. The slits segment the cylindrical-envelope into separate peripheral segments.

Optionally, the rear end of each peripheral segment is sloped, starting at a first rear corner at of each peripheral segment, and ending at the other corner of that peripheral segment and at a predesigned distance from the rear end of the rear plug. When the detonation assembly is operatively assembled, each slit accommodates the open end of a respective wing, wherein, when the recoilless-cartridge-assembly is operatively assembled, the detonation assembly embraces the primary casing of the primary cartridge unit. The rear end of each of the sloped peripheral segment may include two slopes, each leading towards a respective neighboring slit.

### BRIEF DESCRIPTION OF THE DRAWINGS

The present invention will become fully understood from the detailed description given herein below and the accompanying drawings, which are given by way of illustration and example only and thus not limitative of the present disclosure, and wherein:
Fig. 1 illustrates a non-recoilless, prior art Tikad system.
Fig. 2 is a top perspective view illustration of an example hovering firearm system, according to aspects of the present disclosure, the firearm system including a single gimbal.
Fig. 3a is a top perspective view illustration of an example hovering firearm system, according to aspects of the present disclosure, the firearm system including two independent gimbals.
Fig. 3b illustrates a controlled trigger-delay scheme for the firearm system of Fig. 3a.
Fig. 4 is a top perspective view illustration of an example hovering firearm system, according to aspects of the present disclosure, the firearm system including two interdependent gimbals.
Fig. 5a illustrates a top, partial cross-section view of a dual-cartridge assembly, according to aspects of the present disclosure.
Fig. 5b illustrates a top, partial cross-section view of one example embodiment of the dual-cartridge assembly shown in Fig. 5a, wherein the dual-cartridge assembly is utilized as a symmetric dual-cartridge assembly.
Fig. 5c illustrates a top, partial cross-section view of one example embodiment of a recoilless firearm utilizing the dual-cartridge assembly shown in Fig. 5a, wherein the dual-cartridge assembly is utilized with a first asymmetric dual-cartridge assembly.
Fig. 6a illustrates a top, partial cross-section view of a dual-cartridge assembly, according to aspects of the present disclosure, wherein the dual-cartridge assembly is utilized as a dual-cartridge assembly, and wherein the secondary cartridge contains an electric, dual-ignition circuit.
Fig. 6b illustrates a top, partial cross-section view of one example embodiment of a recoilless firearm utilizing the second asymmetric dual-cartridge assembly shown in Fig. 6a.
Fig. 7 illustrates a cross-section view of a portion of a firearm, showing the principles of a counter-mass mechanism, according to aspects of the present disclosure.
Figs. 8a-8d illustrate, in a partial cross-section views, an example structure and the firing steps of using an example disposable firing pin to bring about detonation and the chain of events involved.
Fig. 9 illustrates a partial cross-section view of a portion of another firearm, showing the principles of another counter-mass mechanism, according to aspects of the present disclosure.
Fig. 10a illustrates a unidirectional energy transfer mechanism, according to aspects of the present disclosure.
Figs. 10b and 10c illustrate another example of a unidirectional energy transfer mechanism, according to other aspects of the present disclosure.
Fig. 11a is an exploded view illustration of an example recoilless firearm system that utilizes the methodology illustrated in Fig. 8.
Fig. 11b is an exploded view illustration of an example recoilless firearm system that utilizes the methodology illustrated in Fig. 8.
Fig. 12 illustrates an example unidirectional energy transfer mechanism, according to aspects of the present disclosure.
Fig. 13a illustrates an example recoilless-cartridge-assembly, according to aspects of the present disclosure.
Fig. 13b is in an exploded view of the recoilless-cartridge-assembly illustrated in Fig. 13a.
Fig. 14a illustrates the piped bolt-hammering-unit moving linearly forward with respect to the respective firearm, towards recoilless-cartridge-assembly, as illustrated in Fig. 13a.
Fig. 14b illustrates the piped bolt-hammering-unit moving linearly forward with respect to the respective firearm, towards another variation of a recoilless-cartridge-assembly, according to aspects of the present disclosure.
Fig. 15a illustrates a partial cross-section view of unidirectional energy transfer mechanism implemented using a blow-forward type recoilless firearm with a primer ignition, wherein the barrel return mechanism includes a barrel unit and a bolt assembly, according to aspects of the present disclosure.
Fig. 15b illustrates a partial cross-section view of the blow-forward type firearm shown in Fig. 15a, at the detonation state.
Fig. 15c illustrates a partial cross-section view of a variation of the blow-forward type firearm shown in Figs. 15a and 15b, wherein the primer ignition utilizes a hammer assembly that includes a barrel unit, a bolt assembly and a hammer, according other aspects of the present disclosure.
Fig. 16 illustrates another an example of a recoilless firearm system having a recoilless cartridge and feeding mechanism, according to aspects of the present disclosure.

### DETAILED DESCRIPTION

The present disclosure will now be described more fully hereinafter with reference to the accompanying drawings, in which preferred embodiments of the disclosure are shown. This disclosure may, however, be embodied in many different forms and should not be construed as limited to the embodiments set forth herein; rather, these embodiments are provided, so that this disclosure will be thorough and complete, and will fully convey the scope of the invention to those skilled in the art.

An embodiment is an example or implementation of the disclosures. The various appearances of "one embodiment," "an embodiment" or "some embodiments" do not necessarily all refer to the same embodiment. Although various features of the disclosure may be described in the context of a single embodiment, the features may also be provided separately or in any suitable combination. Conversely, although the disclosure may be described herein in the context of separate embodiments for clarity, the disclosure may also be implemented in a single embodiment.

Reference in the specification to "one embodiment", "an embodiment", "some embodiments" or "other embodiments" means that a particular feature, structure, or characteristic described in connection with the embodiments is included in at least one embodiment, but not necessarily all embodiments, of the disclosures. It is understood that the phraseology and terminology employed herein are not to be construed as limiting and are for descriptive purpose only.

Meanings of technical and scientific terms used herein are to be commonly understood as to which the disclosure belongs, unless otherwise defined. The present disclosure can be implemented in the testing or practice with methods and materials equivalent or similar to those described herein.

It should be noted that orientation related descriptions such as "bottom", "up", "upper", "down", "lower", "top" and the like, assumes that the associated item, such as the firearm system or a portion thereof, is operationally situated.

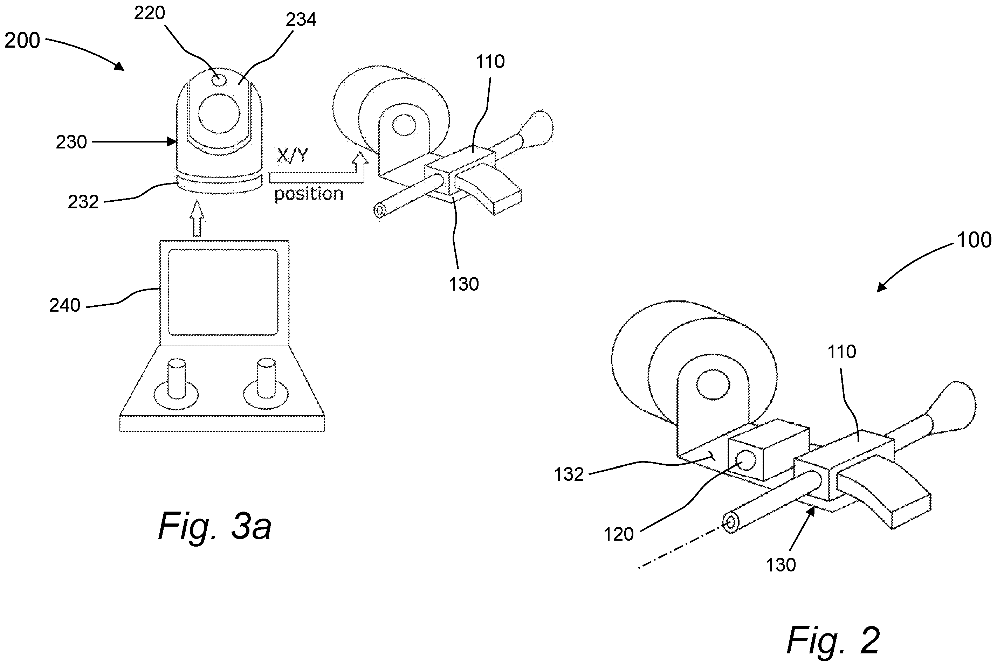

Reference is made back to the drawings. Fig. 2 illustrates an example hovering firearm system **100,** having a single gimbal **130** with one or more axes, according to aspects of the present disclosure. Firearm system **100** further includes a firearm **110** and an electro-optical (EO) module **120.** In this embodiment, firearm **110** and EO module **120** are attached, with no limitations, to same carrying face **132** of gimbal **130,** wherein EO module **120** includes a camera having an optical line of sight, which is boresight with firearm **110.** It should be noted that gimbal **130** can have one or more axes of motion.

It should be further noted that terms "boresight" or "boresighting", as used in this disclosure, refer to methods of adjustment made to an optical line of sight, coupled with a firearm barrel, to align the firearm barrel with the optical line of sight. The boresighting between firearm **110** and electro-optical module **120** can be done using mechanical boresighting or electronic image shift/crosser motion, wherein the electronic boresighting may be updated in real-time using ballistic calculations, wind vector calculations or both.

Reference is now made to Fig. 3a, showing a top perspective view illustration of another example of a hovering firearm system **200,** according to aspects of the present disclosure, wherein the firearm system **200** includes two independent gimbals. Firearm **110** is still attached to gimbal **130,** while EO module **120** is attached to gyro-stabilized gimbal **234.** Both gimbals **130** and **234** can have one or more axes of motion, wherein both gimbals **130** and **234** are mounted on common platform (not shown), for example a drone. The present invention will be described herein, with no limitations, the term "common platform" being a drone, but the common platform can be, within the scope of the present invention, any moving platform.

The steering signals from a control unit **240** are used to control the EO gyro-stabilized gimbal **234,** wherein the position report signals of EO gyro-stabilized gimbal **234** are used to control the firearm gimbal **130,** to thereby allow both gimbals to reach the same angular positioning, where both gimbals **130** and **234** are pointing to the same target within predefined error range/envelop.

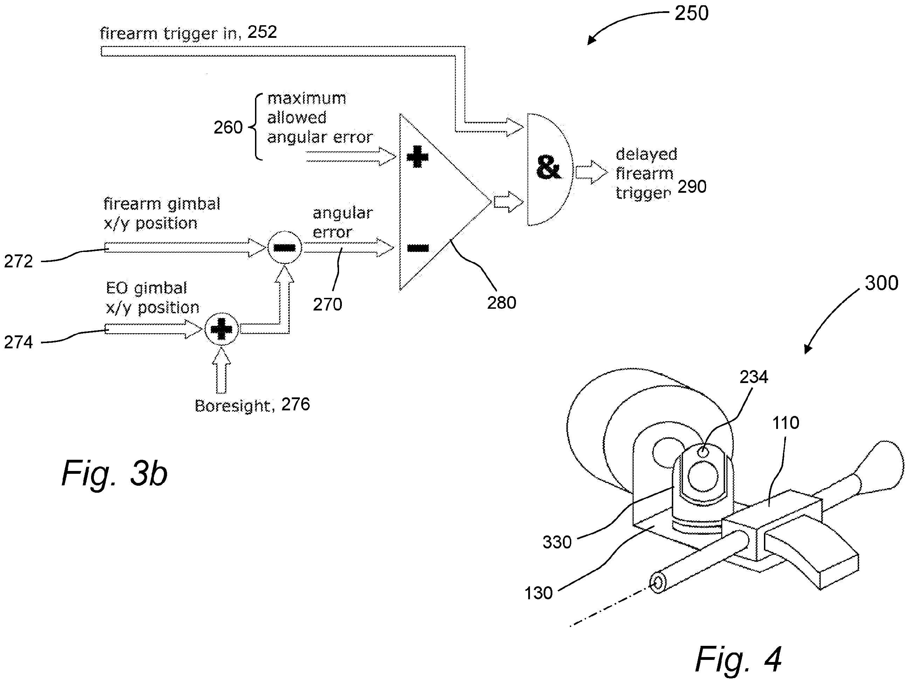

Reference is also made to Fig. 3b, illustrating a controlled trigger-delay scheme **250** for firearm system **200.** Preferably, the optical line of sight of the EO module **120,** being attached to gyro-stabilized gimbal **234,** is controlled by EO control unit **240,** wherein gimbal **234** is predesigned to be fast enough to provide the user with real-time stabilized image, while firearm gimbal **130** may have slower response and may use a different motor type to provide firearm aiming, being a heavier unit.

Once a trigger pulse **252** is sent to control unit **240,** the firearm triggering is delayed until both gimbals - firearm gimbal **130** and EO gyro-stabilized gimbal **234** are pointing to the same target within predefined error envelop **260.** The angular error **270** between firearm **110** and EO module **120** is calculated and compared with the maximum allowed angular error **260.** The angular error **270** is calculated from the X/Y positions signal **272** of firearm gimbal **130,** to which the firearm barrel is coupled, and the X/Y positions signal **274** of EO gyro-stabilized gimbal **234,** to which the optical line of sight of the EO module **120** is coupled. If angular error **270** ≤ maximum allowed angular error **260,** the firearm trigger pulse is forwarded to firearm **110.** Else boresighting shift between firearm gimbal **130** and EO gyro-stabilized gimbal **234,** continuous, until angular error **270** ≤ maximum allowed angular error **260.** Once inside the maximum allowed angular error **260,** the shot is executed. It should be noted that boresight shift between the gimbals is preferably calculated in real-time, using ballistic calculations, wind vector calculations or both.

Reference is also made to Fig. 4, illustrating a top perspective view of an example hovering firearm system **300,** according to aspects of the present disclosure, the firearm system including two interdependent gimbals. Hovering firearm system **300** is similar to firearm system **200,** but instead of using two independent gimbals **130** and **234,** the EO gyro-stabilized gimbal **234** is attached onto firearm gimbal **130,** forming a single, interdependent apparatus.

Being attached to same base point, the angular error formed is lower than in the firearm system **200** configuration, due to the non-linearity of encoders involved. Thus, in apparatus **300** ("EO gimbal **234** on firearm gimbal **130")** the boresight position is always reached by firearm gimbal **130,** as the angular position of EO gimbal **234** is centripetal and thereby proximal to the EO center point.

It is a further aspect of the present disclosure to provide a firearm having a recoil-prevention mechanism, while using off-the-shelf ammunition.

According to some aspects of the present invention, there are provided firearm recoil-prevention mechanisms utilizing active recoil cancellation. The active recoil cancellation uses an additional cartridge/combustion powder that generates a thrust force that is predesigned to cancel the recoil of the primary cartridge by providing a counter symmetric thrust in a direction that is exactly opposite to the direction of recoil generated by the detonated primary cartridge.

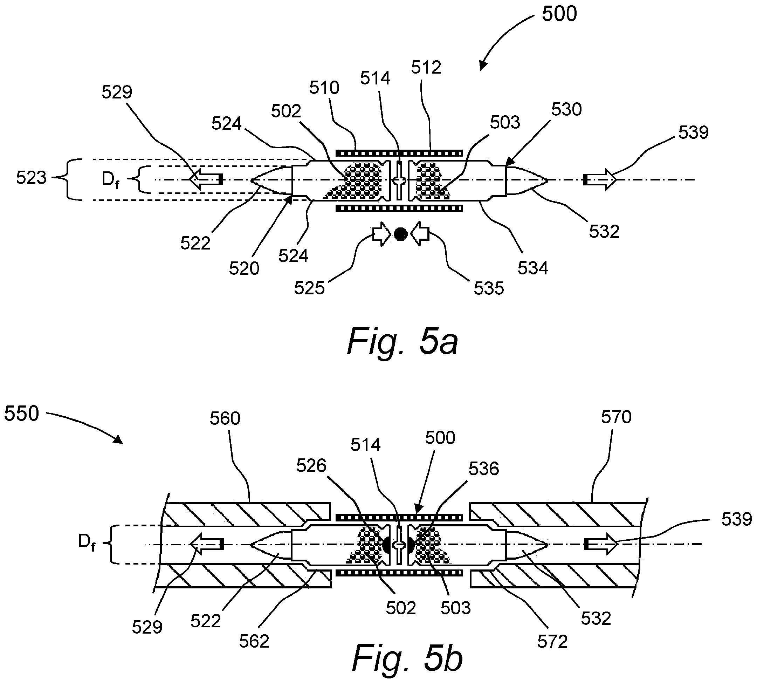

Reference is now made to Fig. 5a, showing a top, partial cross-section view of an active recoil cancelation mechanism **500,** according to aspects of the present disclosure. The active recoil cancelation mechanism **500** apparatus takes the form of a dual-cartridge assembly. The active recoil cancelation mechanism **500** includes a dual-cartridge assembly **510,** configured to accommodate one or more pairs of a primary cartridge **520** and a secondary cartridge **530,** and a dual firing pin unit **514** having dual firing pins.

Each pair of cartridges includes a primary cartridge **520** and secondary cartridge **530** that are arranged back-to-back inside the dual-cartridge assembly **510,** wherein each cartridge **(520, 530)** can be a common cartridge, having a bullet **(522, 532)** and a bullet casing **(524, 534).** The primary cartridge **520** is a "combat" cartridge, while the secondary cartridge **530** can be any kind of a "dummy" cartridge.

In the example shown in Figs. 5a and 5b, the dual-cartridge assembly **510** is a symmetric dual-cartridge assembly **510.** Upon applying a hammering force onto both cartridges **(520** and **530)** a chain reaction of both cartridges **(520** and **530)** begins. The dual firing pin unit **514** splits the hammer force between respective primers **(526, 536)** of the cartridge cases **(524, 534),** to thereby generate simultaneous ignition of both cartridges **(520** and **530),** to thereby detonate the respective gunpowder **(502, 503)** stored there inside, and generated respective thrusts **(525, 535),** whereby equal recoil forces are formed by the generated thrusts **(525, 535).** The recoil force formed by the generated thrust **535** is equal to the recoil force formed by the generated thrust **525,** whereas by being in opposite directions, the two recoil forces cancel each other.

It should be noted that in order to simplify the operation of the firearm, dual-cartridge assembly **510** is configured as a single unit that is loaded into firearm corresponding feeding mechanism (not shown).

It should be noted that the embodiment principle of active recoil cancelation apparatus **500,** may be implemented is various variations as shown in the following examples, all of which are within the scope of the present invention.

Fig. 5b illustrates a top, partial cross-section view of one example embodiment of a firearm **550** of the dual-cartridge assembly **500** shown in Fig. 5a. Firearm **550** includes a front ("combat") barrel **560** and a rear ("dummy") barrel **570,** wherein front barrel **560** and a rear barrel **570** are equal in length. Both primary cartridge **520** and secondary cartridge **530** are of the same type, including the same weight and quantity of gunpowder **(502, 503).** In this example the front combat barrel **560** is fixed while the rear barrel **570** is utilized as a hammer is used to transfer the detonation impact energy, as described hereabove.

Upon simultaneously activating dual firing pin unit **514** on both primers **526** and **536,** respectively, the recoil force formed by the generated thrusts **535** and **525,** whereas by being in exact opposite directions, the two recoil forces cancel each other, while the front bullet **522** ejects from front barrel **560** in a forward direction and the rear bullet **532** ejects from rear barrel **570** in a backward direction.

It should be further noted that when using common cartridges **(520, 530),** there are often variations in the gunpowder **(502, 503)** quantity, the respective primers **(526, 536),** etc. Furthermore, the dual barrels firearm **550** has about double the size and double the weight of a compatible single barrel firearm. To overcome the above-mentioned deficiencies of firearm **550,** the following improved embodiments are described.

It should be further noted that the bullet **(522, 532)** in each common cartridge **(520, 530)** has a rear section and a front section, wherein the rear section of the bullet seals the front end of the casing **(524, 534).** The barrel of the firearm has an inner-barrel-diameter D_{f}, the rear section of a bullet **(522, 532)** has an external diameter that is fitted to the inner-barrel-diameter D_{f} of the respective firearm barrel (that is, the rear section of a bullet **(522, 532)** has an external diameter that is slightly larger than the inner-barrel-diameter D_{f} of the respective firearm barrel to thereby obtain a sealing effect, to maximize the respective thrust force, whereas the bullet is made of a much softer material than the material of the respective barrel). Furthermore, the casing **(524, 534)** of the respective cartridge has an external diameter that is larger than the inner-barrel-diameter Dr.

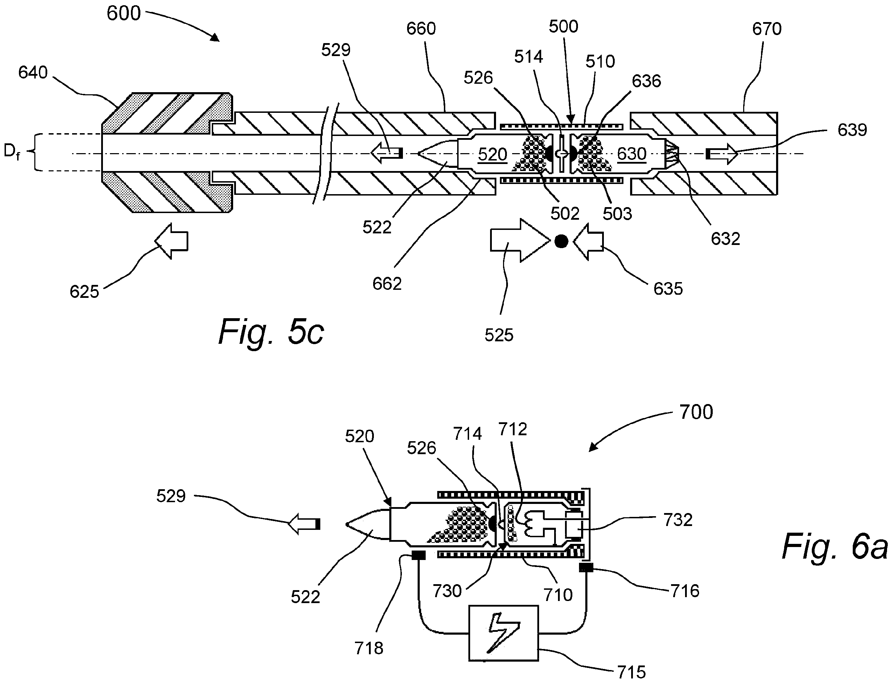

Fig. 5c illustrates a top, partial cross-section view of one example embodiment of a firearm **600** of the dual-cartridge assembly **500** shown in Fig. 5a, wherein the dual-cartridge assembly **500** is utilized as a first asymmetric dual-cartridge assembly. As in firearm **550,** firearm **600** includes a front ("combat") barrel **560** and a rear ("dummy") barrel **570,** however, front barrel **660** and a rear barrel **670** are not equal in length. Front barrel **660** has a normal length adapted to shoot front bullet **522** forward therethrough at a preconfigured ballistic path. Rear barrel **670** is shorter than the length of front bullet **522.** The primary cartridge **520** is a "combat" cartridge, while the secondary cartridge **630** may be a "combat" cartridge of the same type or just dummy or blank cartridge. As such, firearm **600** is preconfigured to the have primary cartridge **520** generate a recoil force **525** (*Fₚ*) that is higher than the recoil force **635** (*Fₛ*) generated by secondary cartridge **630,** such that: *Fₛ + ΔF = Fₚ.*

The difference in thrust forces *ΔF* between the primary and secondary cartridges **(520** and **630)** is compensated using an additional recoil compensation element - a muzzle-brake **640.** Generally, a recoil compensator (such as, with no limitations, a muzzle brake) is a device known in the art that is connected to the muzzle of a firearm and redirects propellant gasses to counter recoil and unwanted muzzle rise. In firearm **600,** muzzle-brake **640** is configured to compensate for the difference in thrust forces ***ΔF*,** by redirecting some of the primary cartridge propellant gasses. Muzzle-brake **640,** in conjunction with the recoil force **635** generated by secondary cartridge **630,** combine into a force that is equal to the recoil force **525** (*Fₚ*) generated by primary cartridge **520** in direction opposite to primary cartridge recoil *Fₚ.*

The advantage of firearm **600** over firearm **550,** is having lower firearm length and lower firearm weight, and can use a secondary ammunition unit that is has a lighter weight than the weight of the primary cartridge **520,** such as, with no limitations, a dummy secondary cartridge **630.** It should be appreciated that the disbalance between the primary and secondary cartridges **(520** and **630,** respectively) gunpowder **(502, 503)** charges has less effect, since the recoil force **525** of the primary cartridge **520** and the "muzzle brake" thrust force **625** are both generated by the primary cartridge gunpowder **502.** Thus, the muzzle-brake **640** is designed proportionally, in order to keep the following balance: *Fₛ + ΔF = Fₚ.* For example, if the **640** is designed to reduce the required rear recoil force **635** (*Fₛ*) by half, that is *ΔF =* 0.5*Fₚ,* the required rear recoil force **635** (*Fₛ*) is also *Fₛ =* 0.5*Fₚ,* a disbalance between the primary and secondary cartridges **(520** and **630,** respectively) gunpowder **(502, 503)** charges has only half the effect compared to when *Fₛ = Fₚ.* It should be appreciated that another recoil reduction element, such as a jet nozzle may be placed at end of the rear barrel **670,** wherein the rear jet nozzle generates forward thrust from exhaust propellant gasses.

It should be appreciated that a recoil compensator such as a muzzle-brake or a jet nozzle may be placed on either the front barrel or the rear barrel, as needed, to compensate for an expected difference in recoil thrust forces *ΔF*.

According to further variations of the present disclosure, Fig. 6a illustrates a top, partial cross-section view of a dual-cartridge assembly **700,** according to aspects of the present disclosure, wherein the dual-cartridge assembly **700** is utilized as a second asymmetric dual-cartridge assembly, and wherein a disposable secondary cartridge **730** contains an electric ignition circuit.

Dual-cartridge assembly **700** uses the same principles of active recoil cancelation **500** apparatus, wherein each pair of cartridges includes a primary cartridge **520** and secondary cartridge **730** that are arranged back-to-back inside a dual-cartridge firearm magazine assembly **710** being a recoilless cartridge assembly and wherein primary cartridge **520** is preferably a common, off-the-shelf cartridge.

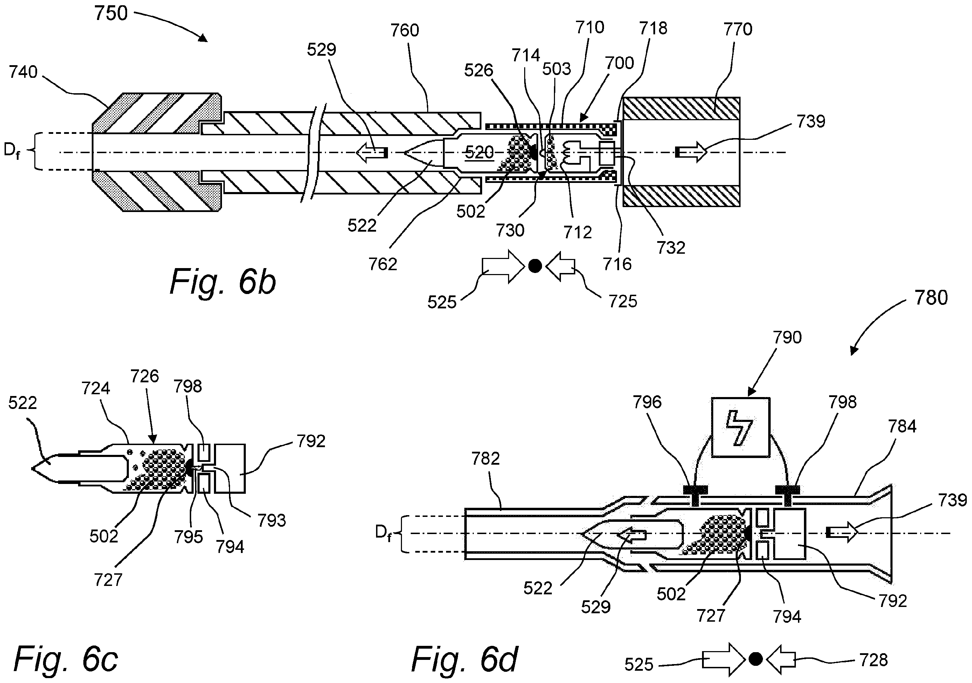

Reference is also made to fig. 6b that illustrates a top, partial cross-section view of one example embodiment of a firearm **750** of the dual-cartridge assembly **700.** The secondary cartridge **730** is an innovative cartridge having an electric, dual-ignition circuit built-in. Secondary cartridge **730** further includes an electronic ignition heater **712** and a firing pin unit **714** that is an integral part of secondary casing **730.** Secondary cartridge **730** further includes a sealing unit **732** that can also serve as a counterweight to the weight of primary cartridge **520,** in addition to propellant gasses that find their way out.

Upon receiving an electronic ignition trigger a high voltage module **715** turned on the electronic ignition heater **712** to thereby detonate the gunpowder **503** disposed inside secondary casing **730.** As a result of that detonation, secondary casing **730** is shifted forward and firing pin unit **714** detonates the primer **526** of primary cartridge **520.** The rest of the chain reaction is similar to that described with respect to firearm **550,** wherein secondary casing **730** is ejected in direction **739** out of a rear barrel **770.** The electronic ignition voltage is transferred, for example, with no limitations, to primary cartridge **520** via two (or more) electrodes **(716** and **718)** and primary cartridge **520,** wherein cartridge assembly **710** is made from a dielectric material.

The main advantage of dual-cartridge assembly **700** is that a mechanical hammer firing mechanism is not required, therefore simplifying the feeding mechanism and the synchronization of the ignition process.

Another advantage of the electronic ignition is that the order in which the cartridges are ignited is known, whereas when the order in which the cartridges are ignited is unknown, the firearm has an unpredictable barrel motion during the fire process (since the physical properties ammunition units are not perfectly repeatable), which may cause growing divergence of the bullets and increase the spread.

It should be appreciated that firearm **750** is preconfigured to the have primary cartridge **520** generate a recoil force **525** (*Fₚ*) that is higher than the recoil force **725** (*Fₛ₂*) generated by secondary cartridge **730,** such that: *ΔF* = *Fₚ, - Fₛ₂.* Hence, similar to muzzle-brake **640,** the difference in thrust forces *ΔF* between the primary and secondary cartridges **(520** and **730)** is compensated using an additional recoil compensation element - a muzzle-brake **740.**

In variations of the present invention, an electrical ignition mechanism is used. An example prior art electrical ignition mechanism is a rifle manufactured by Remington: Model 700 EtronX, which uses an electronic primer ignition system.

Reference is also made to Fig. 6c including a cartridge **726** having a bullet **522** and a bullet casing **724** containing a primer **727.** Fig. 6c further illustrates a counter-weight **792** having an electric arc generation unit **793.**

Fig. 6d schematically illustrates an example firearm **780** that utilizes cartridge and counter-weight sub-system shown in Fig. 6c. Firearm **780** includes a front barrel **782** and a rear barrel **784.** Firearm **780** further includes an electrical ignition mechanism **790** configured to generate a high ignition voltage that is applied via two electrodes **(796** and **798),** for example to bullet casing **724** and to counter-weight **792,** wherein both said bullet casing **724** and said counter-weight **792** are made from conductive materials and separated by an insulator (for example insulator **794).** By way of example, insulator **794** has an opening formed at the middle, facing primer **727.** Thus, when electricity is applied to electrodes **796** and **798,** an electric arc **795** is formed between said counter-weight **792** and said primer **727.** To better centralize the electric arc a conductive protrusion extends from said counter-weight **792** and towards said primer **727.** The electric arc **795** heats primer **727,** to thereby detonate gunpowder **502** inside bullet casing **724.** As a result of that detonation, casing **730** is shifted forward and firing pin unit **714** detonates the primer **526** of primary cartridge **520.** The rest of the chain reaction is similar to that described with respect to firearm **550,** wherein bullet casing **724,** insulator **794** and counter-weight **792** are ejected in direction **739** out of a rear barrel **784.**

It should be appreciated that at least one or both electrodes **(796** and **798)** are electrically insulated from the gun barrels **(782** and **784).** According to some aspects of the present invention, there are provided recoil-prevention mechanisms using an off-the-shelf cartridge with a single gunpowder charge, wherein the generated gunpowder energy is split between the bullet that is fired through the firearm front barrel, and the bullet/casing that used as counter mass that is fired through the rear of the firearm, without applying a recoil force to the firearm itself. The recoil-prevention mechanisms of the present disclosure provide solutions for elimination of recoil energy transfer caused by primer ignition, facilitating usage of standard cartridge while proving recoilless operation including solution for primer ignition and feeding mechanisms.

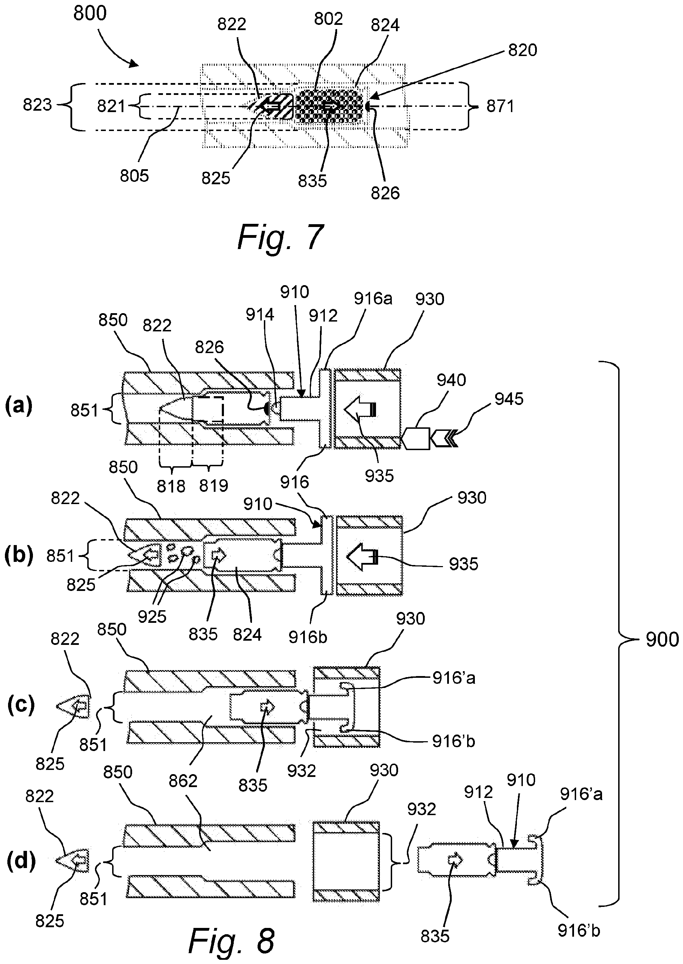

Reference is now made to Figs. 7 and Fig. 8(a), illustrating a partial cross-section view of a portion of a recoilless firearm **800,** showing the principles of a counter-mass mechanism, according to aspects of the present disclosure. The counter-mass mechanism of recoilless firearm **800** utilizes a single, standard (off-the-shelf) cartridge **820** that includes a bullet **822** having a rear section **819** and a front section **818,** bullet casing **824** wherein rear section **819** of bullet **822** seals the front end of casing **824,** gunpowder **802** and primer **826.** However, this common sealing method is given by way of example only, with no limitations on other mechanisms and/or methods, known in the art, for sealing a standard cartridge. It should be appreciated that these sealing methods can be used herein within the scope of the present disclosure.

The barrel of recoilless firearm **800** has an inner-barrel-diameter D_{f}, wherein the rear section **819** of a bullet **822** has an external diameter **821** that is fitted to the inner-barrel-diameter D_{f} of the respective firearm barrel. Furthermore, the casing **824** of the respective cartridge has an external diameter **823** that is larger than the inner-barrel-diameter D_{f} of the respective firearm barrel.

It should be further noted that a cartridge assembly **820** is placed before firing in a fitted cartridge-chamber **862** that is wider than D_{f}, to thereby allow to accommodate cartridge assembly **820,** but upon firing, the bullet ejects out of inner-barrel-diameter D_{f}, wherein casing **824** absorbs the recoil force and is thus pushed backward by the formed gases.

It should be appreciated that although the description refers to firearm cartridges that includes a bullet and a casing, the same principles can be applied to other known-in-the-art ammunition types, for example: shotgun shell with any payload selected from the group including projectile, slug, shot and pellets.

It should be further noted that standard ammunition, such as cartridge assembly **820,** is not designed for recoilless operation. Conventionally, cartridge assembly **820** is configured to be detonated, when a mechanical hammer (not shown) hits the centerfire mechanical primer **826** of cartridge assembly **820,** to thereby detonate gunpowder **802** disposed inside bullet casing **824.** When primer **826** ignites, it is almost impossible to prevent the transfer a large portion of the formed recoil energy from the bullet casing **824** back to the hitting hammer of the firearm.

By using a counter-mass mechanism, according to aspects of the present disclosure, such a recoil effect can be prevented. The barrel of recoilless firearm **800** has a barrel front opening **851** (*D_{f}*) and, according to aspects of the present disclosure, a barrel rear opening **871.** When bullet **822** is fired in the direction **(825)** of target, through the firearm front opening **851** (**D_{f}**) of recoilless firearm **800,** in the direction of target, bullet casing **824** is used as a counterweight to the fired bullet **822,** wherein bullet casing **824** is fired in an opposite direction through the rear opening **871** of recoilless firearm **800,** whereas energy generated by the detonated gunpowder **802** is split between bullet **822** and bullet casing **824,** firing them in opposite direction, without any recoil force effecting the recoilless firearm **800.**

Figs. 8a-8d illustrate a firearm assembly and methodology **900** of using thereof, in a partial cross-section views, an example structure and the firing steps of using an example piped bolt-hammering-unit **930** and a disposable firing pin **910,** to bring about detonation and the shooting chain of events involved. Firearm assembly and methodology **900** solves the problem formed by the recoil force transfer through hammer using the principles outlined in Fig. 7. When activated, a unidirectional energy transfer mechanism **940** transfers a forward thrust **945** to bolt-hammering-unit **930** that thereby moves forward in direction **935.**

Thus, in first firing step, piped bolt-hammering-unit **930** moves forward in direction **935,** meets firing pin **910** and continuous to move forward until the firing pin **910** pecks primer **826,** as shown in the example illustrated in Fig. 8(b), to thereby ignite primer **826** and thereby detonate gunpowder **802** disposed inside cartridge casing **824** to initiate the firing of bullet **822** in a forward direction **825.**

While the explosion of gunpowder **802** generates propellant gasses **925** that, on the one hand push bullet **822** in a forward direction **825,** the propellant gasses **925** also push bullet casing **824** in the opposite direction **835.** However, unidirectional energy transfer mechanism **940** prevents bolt-hammering-unit **930** from moving back in direction **935.** As a result, as shown in the example illustrated in Fig. 8(c), bullet casing **824** is pushed back by propellant gasses **925,** wherein recoil force are applied to firing pin **910** and bolt-hammering-unit **930.** While bolt-hammering-unit **930** is blocked by unidirectional energy transfer mechanism **940,** the recoil force is applied to firing pin **910** and cause the deformation or the breaking a part of the firing pin **910,** as will be further described here below. The deformed firing pin **910** and any parts thereof then slides through the inner opening **932** of bolt-hammering-unit **930.**

In the last firing step, as shown in the example illustrated in Fig. 8(d), both firing pin **910** and bullet casing **824,** that absorb the energy of the recoil are flown out through inner opening **932** of bolt-hammering-unit **930** out of the firearm rear.

In the example shown in Figs. 8a-8d, a non-limiting example of a disposable firing pin **910** is shown, and an example methodology **900** of using thereof. Firing pin **910** include a pin **914,** a pin-body **912** and wings **916.** In the example shown in Figs. 8c-8d, the deformation takes a non-limiting form of the bending of wings **916** of disposable firing pin **910.** As such, pin-body **912** is predesigned to withstand the recoil force and wings **916** are predesigned to band at a preconfigured location and force.

It should be noted that a predesigned muzzle-brake **640** can be added to the recoilless firearm, wherein a muzzle-brake **640** is used to cancel the small residual portion of the recoil energy formed during deformation of disposable firing pin **910.**

It should be appreciated that recoilless operation of a firearm that uses standard ammunition can be achieved by preventing the recoil energy, formed upon detonation of the primer **826,** from being transferred back to firearm hammer. According to aspects of the present this is achieved by using a disposable firing pin that is deformed or broken apart by the bursting recoil energy and eject from the firearm, along with the ammunition casing, via a designated escape path, which bypasses the hammer.

It should be noted that the disposable firing pin may have a variety of shapes and can be operatively coupled to the hammer and/or to the ammunition by any form or method.

As mentioned hereabove, a unidirectional energy transfer mechanism of a bolt-hammering-unit **930** may be embodied in numerous ways and shapes, whereas the piped shape is presented as an example only, with no limitation. The objective of a hammer unidirectional energy transfer mechanism is to allow bolt-hammering-unit **930** the to move freely and linearly in a first direction **(825),** and be blocked when trying to move in the opposite direction **(835).** Thereby, allowing free motion towards primer **826** and block the return upon the formation of the propellant gasses **925.**

According to aspects of the present disclosure, there are provided example embodiments of a hammer unidirectional energy transfer mechanism **940,** wherein the unidirectional energy transfer mechanism is securely coupled with the bolt-hammering-unit **930.** In some embodiments, a ratchet-based or motion limitation mechanisms are used, wherein a motion limitation mechanism is locked after the ammunition, such as cartridge assembly **820,** is fitted into inner opening **932** of bolt-hammering-unit **930** and limits the bolt-hammer-unit **930** backward motion, and wherein a ratchet-based mechanism allows only unidirectional linear motion while preventing motion of the moving part in the opposite direction. It should be noted that any motion limitation mechanism, known in art as a "breechblock locking mechanism", for example, a breech locking mechanism shown in https://en.wikipedia.org/wiki/Rotating_bolt, can be used as a unidirectional linear motion to block rearward motion of the bolt-hammer-unit **930,** while in a cocked state.

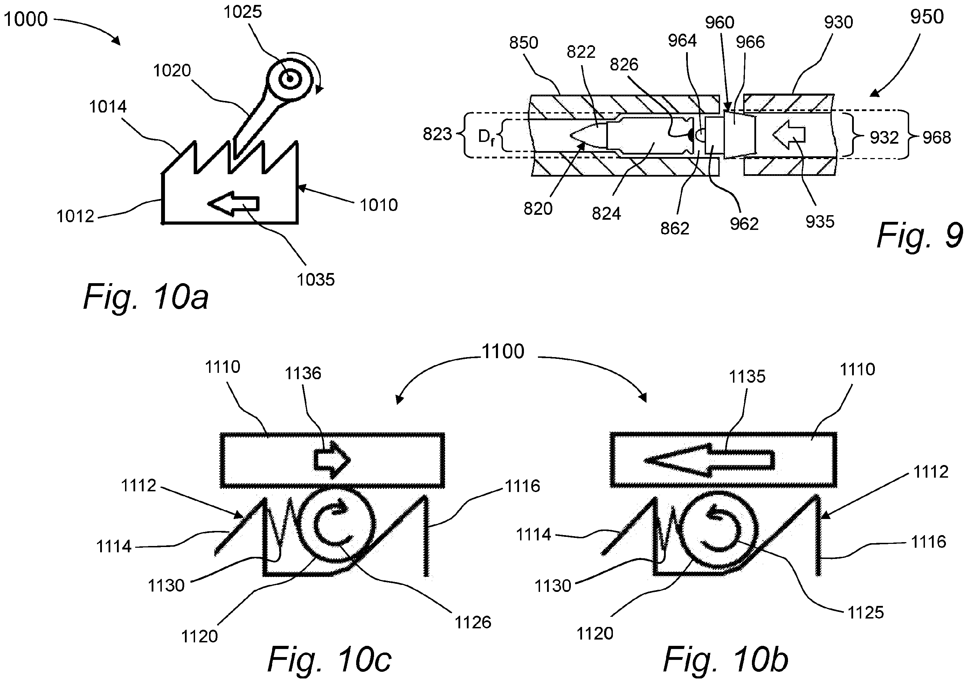

Reference is now made to Fig. 9, illustrating a partial cross-section view of a portion of a recoilless firearm **950,** showing the principles of a counter-mass mechanism, according to other aspects of the present disclosure. The counter-mass mechanism of recoilless firearm **950** utilizes a single, standard (off-the-shelf) cartridge **820** that includes a bullet **822,** a bullet casing **824** wherein the rear section of bullet seals the front end of casing **824,** gunpowder and a primer **826.** However, this common sealing method is given by way of example only, with no limitations on other mechanisms and/or methods, known in the art, for sealing a standard cartridge. It should be appreciated that these sealing methods can be used herein within the scope of the present disclosure.

The front barrel **850** of recoilless firearm **950** has an inner-barrel-diameter D_{f}, wherein the casing **824** of the respective cartridge has an external diameter **823** that is larger than the inner-barrel-diameter D_{f} of the respective firearm barrel.

It should be further noted that a cartridge assembly **820** is placed before firing in a fitted cartridge-chamber that is wider than D_{f}, to thereby allow to accommodate cartridge assembly **820,** but upon firing, the bullet ejects out of inner-barrel-diameter D_{f}, wherein casing **824** absorbs the recoil force and is thus pushed backward by the formed gases.

It should be appreciated that although the description refers to firearm cartridges that includes a bullet and a casing, the same principles can be applied to other known-in-the-art ammunition types, for example: shotgun shell with any payload selected from the group including projectile, slug, shot and pellets.

As shown in Fig. 9, recoilless firearm apparatus **950** utilizes another counter-mass mechanism **960,** according to aspects of the present disclosure, such that a recoil effect can be prevented. Counter-mass mechanism **960,** being another embodiment of a disposable firing-pin, includes a frontal-body-section **962** having a pin-front-end, being an open end, wherein a pin **964** is disposed at the pin-front-end. Counter-mass mechanism **960** further includes a rear-body-section **966** having a pin-rear-end with a larger diameter end **968,** wherein the larger diameter of said pin-rear-end is configured to seal the rear discharge opening (similar to the rear opening **871** of recoilless firearm **800)** of front barrel **850.**

When in a cocked state, the rear of the standard cartridge is seated inside the cartridge-chamber **862** and the pin **964** is positioned in safe proximity to the primer **826,** as shown in Fig. 9. Typically, the firing pin is made of rigid materials, while at least the rear-body-section **966,** including the larger diameter end, is made of deformable or breakable materials, such that when applying an excess force *Fₑ* onto firing pin **964,** the Counter-mass mechanism **960** deforms or breaks.

In one embodiment, a first ratchet-based mechanism is used. Fig. 10a illustrates a unidirectional energy transfer mechanism **1000,** according to aspects of the present disclosure. Unidirectional energy transfer mechanism **1000** includes a linear moving part **1010** having one or more saw teeth **1014** and a pivotal leaping-arm **1020** configured to pivot about axis **1025.** As linear moving part **1010** moves, in the example shown, in direction **1035,** leaping-arm **1020** pivotally leaps over the sloped side of the next tooth **1014,** wherein when linear moving part **1010** tries to move in an opposite direction to direction **1035,** leaping-arm **1020** gets stuck in the generally vertical side of the next tooth **1014.**

In another embodiment, a second ratchet-based mechanism is used. Figs. 10b and 10c illustrate another example unidirectional energy transfer mechanism **1100,** according to some other embodiments of the present disclosure. Unidirectional energy transfer mechanism **1100** includes a linear moving slider **1110,** being the moving part, a motion control element **1112** having one or more saw teeth **1112** and a moving ball **1120,** disposed between the generally vertical side **1116** of a first tooth **1112** and the sloped side **1114** of a second tooth **1112,** wherein moving ball **1120** is securely interconnected to the vertical side **1116** of the first tooth **1112** by a biasing element such as, with no limitation, a spring **1130.** As linear moving slider **1110** moves in direction **1135,** as shown in the example illustrated in Fig. 10b, biasing element **1130** maintains moving rotating (in direction **1125)** ball **1120** free such that linear moving slider **1110** can move freely. When linear moving slider **1110** tries to move in an opposite direction **(1136,** as shown in the example illustrated in Fig. 10c) to direction **1135,** biasing element **1130** pushes moving rotating (in direction **1126)** ball **1120** and thereby moving ball **1120** climbs over the sloped side **1114** of a second tooth **1112** such that moving ball **1120** gets stuck between the sloped side **1114** of a second tooth **1112** and the bottom of linear moving slider **1110,** to thereby block linear moving slider **1110** from moving further in direction **1136.**

It should be noted that there are many motion-limiting and ratchet mechanisms, principles and modifications known in art that used in industrial and automotive applications, including a "seat belt", wherein when a "seat belt ratchet" is pulled in slow motion, it moves freely, it holds the passenger in place comfortably, and when the "seat belt ratchet" is pulled in fast motion, the seat belt is held in place keeping the passenger in place. In some of the prior art ratchet mechanisms the saw teeth are replaced by bearings or rollers to provide fast response and bearing of high pressure. Hence, the present disclosure is not limited in using any specific ratchet mechanism known in art.

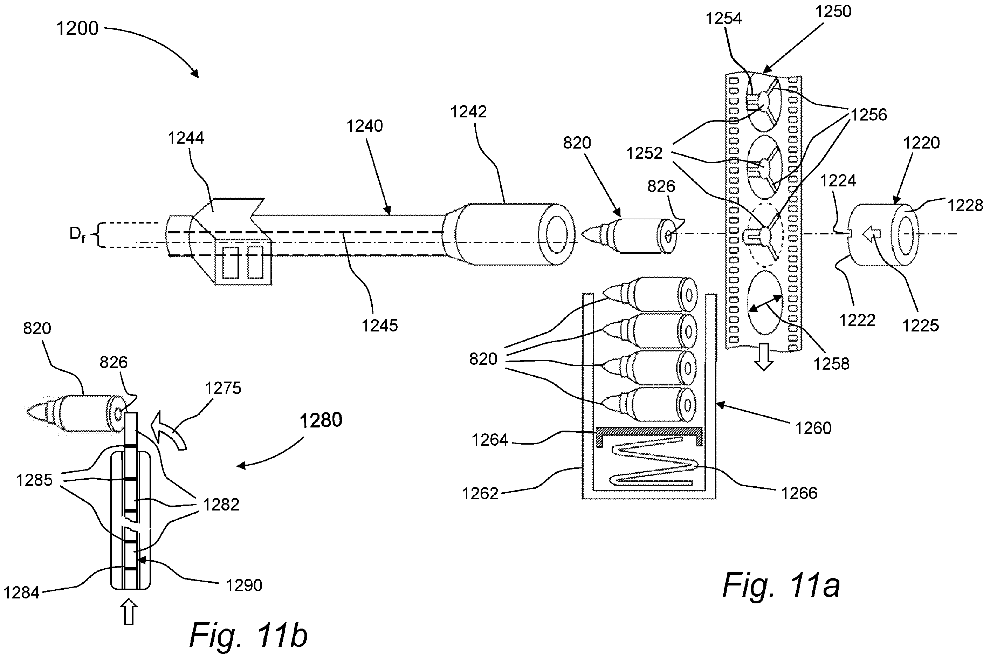

According to aspects of the present disclosure, there is provided an example firearm system 1200, as illustrated in Fig. 11a, that utilizes the methodology of firearm assembly and methodology **900.** Firearm system **1200** includes a barrel **1240** having a cartridge-chamber **1242,** at least one disposable firing pin **1252** and a piped bolt-hammering-unit **1220** (similar to piped bolt-hammering-unit **930).** In this non-limiting example, each firing pin **1252** includes at least two wings **1256** (similar to wings **916),** a pin (not shown) similar to pin **914** and a pin-body **1254** (similar to pin-body **912).** In the frontal face of piped bolt-hammering-unit **1220,** grooves **1224** are formed, each configured to accommodate a respective wing **1256** of firing pin **1252.**

Optionally, firearm system **1200** further includes a cartridge magazine **1260,** adapted to hold cartridges **820,** for automatic and semi-automatic firearms. In such embodiments, and other embodiments, respective multiple disposable firing pins **1252** may be supplied via a separate, continuous band magazine **1250** having multiple disposable firing pins **1252.**

When firearm system **1200** is activated, a unidirectional energy transfer mechanism transfers a forward thrust to piped bolt-hammering-unit **1220** that thereby moves forward in direction **1225,** according to the methodology described with respect to firearm assembly and methodology **900.** A respective firing pin **1252** is dispatched from band magazine **1250,** wherein wing **1256** of firing pin **1252** are sat inside respective grooves **1224** of piped bolt-hammering-unit **1220,** while piped bolt-hammering-unit **1220** moves forward through band magazine **1250,** until the pin of disposable firing pin **1252** pecks primer **826** of cartridge assembly **820,** and the firing sequence begins, including the bending of wings **1256** of firing pin **1252** and including both firing pin **1252** and bullet casing **824,** that absorb the energy of the recoil are flown out through the inner opening of piped bolt-hammering-unit **1220,** out of the rear of firearm system **1200.**

Other example embodiments of hammer unidirectional energy transfer mechanisms will now be described. According to aspects of the present disclosure, there are provided example embodiments of a unidirectional energy transfer mechanism **940,** wherein a bolt-and-hammer mechanism are used.

It should be noted that the disposable firing pin may come in the form of being detachably embedded in an elongated band magazine, wherein a single firing pin is torn off from the band in each shot. An example of such embodiment is detailed with respect to band magazine **1250,** described hereabove. According to aspects of the present invention, the disposable firing pin may also come in the form of being detachably mounted on an elongated stick of firing pin, wherein a single firing pin is torn off from the stick in each shot. The stick may be straight, arched or in a circled form. Another non-limiting example illustrates in Fig. 11b a stick magazine **1280.** Stick magazine **1280** includes rigid segments of firing pin **1282,** that are interconnected by a breakable element **1285.** When a hitting force **1275** is applied to the firing pin **1282** that is first in line, the end of the stick serves as the pecker that pecks the primer **826.** The wire stick then moves up whereas the next in line firing pin segment **1282** becomes the first in line firing pin segment **1282.**

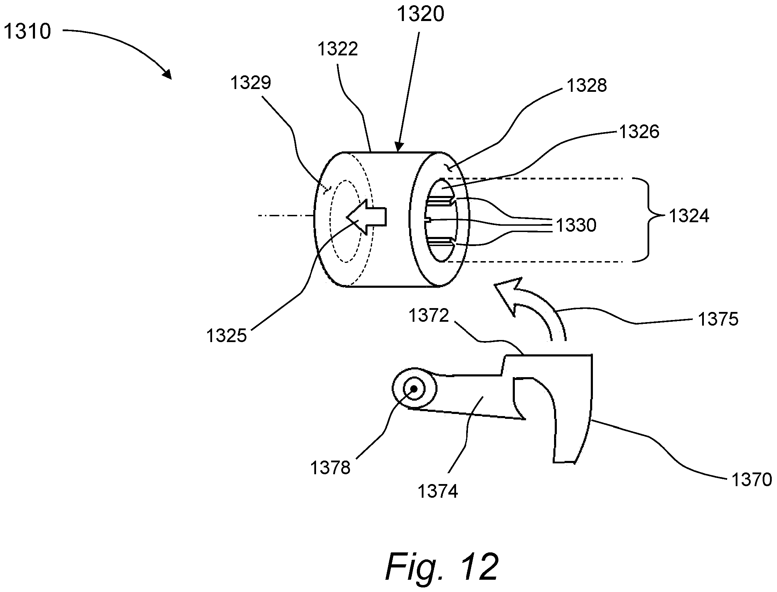

Fig. 12 illustrates a unidirectional energy transfer mechanism **1310,** according to aspects of the present disclosure. Unidirectional energy transfer mechanism **1310** includes a ribbed bolt-hammering-unit **1320** and a hammer **1370.** Piped bolt-hammering-unit **1320,** being the bolt, has an opening **1324** formed there at the center, and one or more directing ribs **1330** placed at preconfigured locations of the inner wall **1326** of opening **1324.**

Hammer **1370** includes a pivotal arm **1374** configured to pivot about axis **1378,** and a hitting face **1372.** When hammer **1370** is activated, it pivots forcefully in direction **1375,** wherein upon hitting face **1372** impacting a proximal end face **1328** of ribbed bolt-hammering-unit **1320,** ribbed bolt-hammering-unit **1320** moves linearly forward with respect to the respective firearm, in direction **1325.**

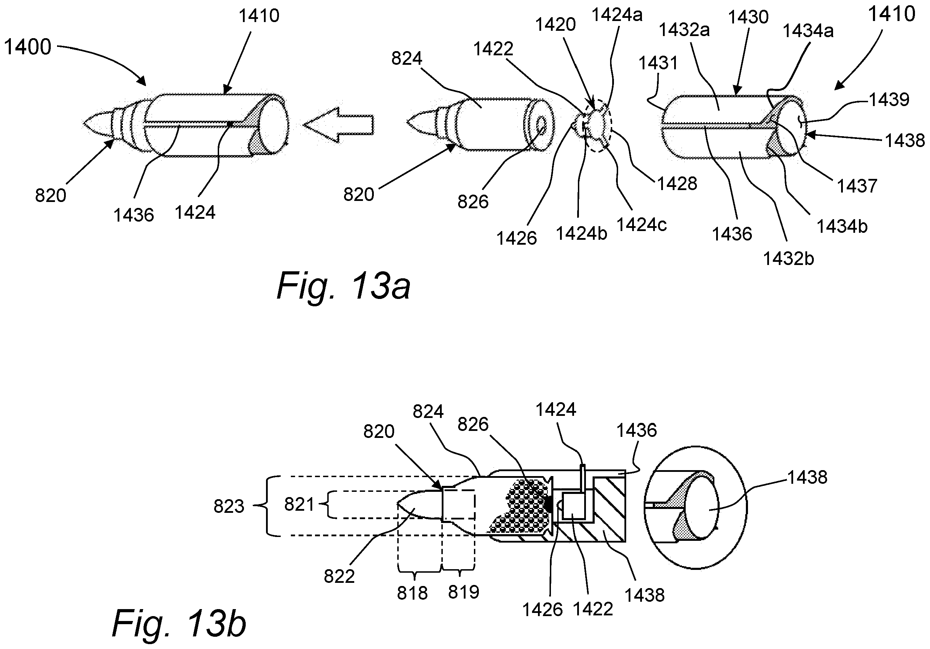

According to aspects of the present disclosure, there is provided an example recoilless-cartridge-assembly **1400,** as illustrated in Fig. 13a in an exploded view. Fig. 13b is a cross-section view of recoilless-cartridge-assembly **1400.** Recoilless-cartridge-assembly **1400** includes a standard cartridge, such as cartridge **520/820,** and a detonation assembly add-on **1410,** adapted to fit onto standard cartridge **820.**

Detonation assembly **1410** includes a cylindrical-envelope **1430** having an inner diameter, an external diameter, a front end **1431** and a rear end **1434,** wherein the front end **1431** operatively faces the barrel of the hosting firearm. The cylindrical-envelope **1430** is enclosed at the rear end side by a cylindrical rear plug, having a cup shape. Cylindrical cup rear plug **1438** includes an enclosed cylindrical wall **1437** enclosed at the rear end by plug-wall **1439,** wherein cylindrical-envelope **1430** is securely attached onto the external surface of cylindrical wall **1437.** It should be noted that detonation assembly **1410** can be made of a single unit.

Detonation assembly **1410** further includes a disposable firing pin **1420** that is similar to disposable firing pin **910.** Disposable firing pin **1420** includes a pin **1426,** a pin-body **1422** and at least one wing **1424,** having a wing-span diameter **1428.**

When operatively assembled, firing pin **1420** is inserted into cylindrical-envelope **1430** via front end **1431,** wherein pin **1426** faces the barrel of the hosting firearm. However, the peripheral wing-span diameter of the ends of the at least one wing **1424** is purposely larger than the internal diameter of cylindrical-envelope **1430** and is smaller than external diameter of cylindrical-envelope **1430.** In order to insert firing pin **1420** into cylindrical-envelope **1430,** a fitted through slit **1436** is formed, for each respective wing **1424,** in cylindrical-envelope **1430,** extending from front end **1431** to rear end **1434.**

Hence, when operatively assembled (or manufactured), each slit **1436** accommodates a respective wing **1424,** such that the open end of each wing **1424** sticking out of the slit **1436,** as illustrated in Fig. 13b. The inner diameter of rear end **1434** of cylindrical-envelope **1430** is enclosed by a rear plug **1438,** to which inner surface of cylindrical-envelope **1430** rear plug **1438** is securely attached.

It should be noted that slits **1436** segment cylindrical-envelope **1430** into separate peripheral segments **1432,** wherein the number of slits **1436,** the number of wings **1424,** and the number of peripheral segments **1432** is equal. However, the of slits **1436** may be twice the number of wings **1424.** It should be further noted that the rear end **1434** of each peripheral segment **1432** is sloped, starting at a first corner of the rear end **1434** of the peripheral segment **1432** (and proximal to the rear end of rear plug **1438),** ending at the other corner of the rear end **1434** of that peripheral segment **1432,** formed by the next slit, and at a predesigned distance from the rear end of rear plug **1438.**

It should be further noted that when recoilless-cartridge-assembly **1400** is operatively assembled, detonation assembly **1400** embraces bullet casing **824** of cartridge **820.**

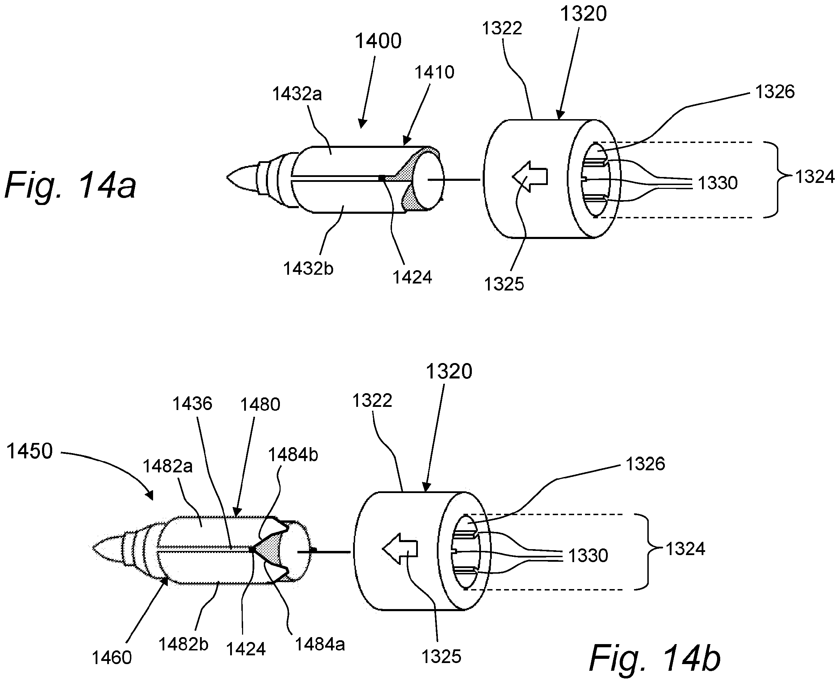

Reference is now also made to Fig. 14a, illustrating a ribbed bolt-hammering-unit **1320** moving linearly forward with respect to the respective firearm, in direction **1325,** towards recoilless-cartridge-assembly **1400.** The diameter of opening **1324** of ribbed bolt-hammering-unit **1320** is fittingly larger than the external diameter of cylindrical-envelope **1430.** When at the rear ends of recoilless-cartridge-assembly **1400,** directing ribs **1330** meet the sloped rear ends **1434** of the respective peripheral segment **1432,** causing detonation assembly **1410** (or optionally, the whole of recoilless-cartridge-assembly **1400)** to pivot until each of the directing ribs **1330** meet the respective slit **1436,** and continues to move forward until meeting the end of the respective wing **1424.** At this point, if recoilless-cartridge-assembly **1400** is in position at the cartridge-chamber of a firearm, firing pin **1420** is pushed forward to thereby, when pin **1426** pecks primer **826** of cartridge assembly **820,** and the firing and detonation sequences begin. It should be appreciated that relative pivotal motion between the ribbed bolt-hammering-unit **1320** and the detonation assembly **1410** can be performed by the recoilless cartridge-assembly **1400,** the ribbed bolt-hammering-unit **1320** or a combination thereof. It should be further appreciated that relative pivotal motion between the ribbed bolt-hammering-unit **1320** and the detonation assembly **1410** can be performed by other mechanisms, for example, each sloped rear end **1434** of a respective peripheral segment **1432** can be replaced by two slopes, each configured to create a pivotal motion of detonation assembly **1410** in opposite pivotal direction and shortening the pivotal step.

Reference is also made to Fig. 14b, illustrating a ribbed bolt-hammering-unit **1320** moving linearly forward with respect to the respective firearm, in direction **1325,** towards another variation of another recoilless-cartridge-assembly **1450,** according to aspects of the present disclosure. Recoilless-cartridge-assembly **1450** includes a standard cartridge, such as cartridge **520/820,** and a detonation assembly add-on **1450,** adapted to fit onto standard cartridge **820.**

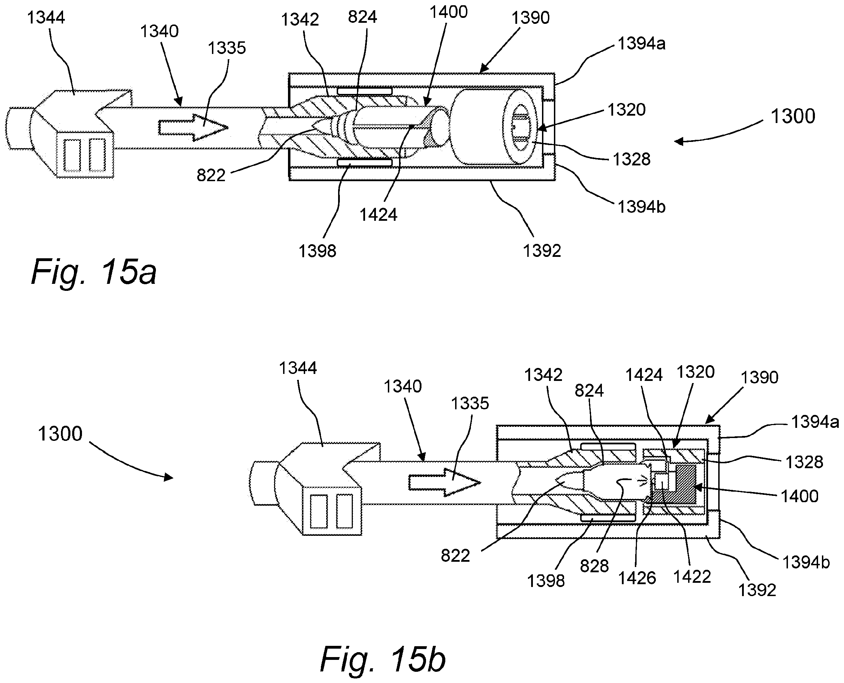

Generally, detonation assembly **1450** is similar to detonation assembly **1400,** except for the rear end **1484** of each peripheral segment **1482,** that correspond the rear end **1434** of each peripheral segment **1432,** respectively. While the sloped rear end of each peripheral segment **1432** leads towards a single slit **1436,** each peripheral segment **1482** has two sloped ends **1484a** and **1484b,** wherein each sloped end **1484** leads towards a neighboring slit **1436.** Therefore, in this case, the number of sloped ends **1484** is twice the number of slit **1436.**Reference is now also made to Fig. 15a that illustrates a blow-forward type firearm **1300** that includes a barrel unit **1340** and a bolt assembly **1390,** according to aspects of the present disclosure. Bolt assembly **1390** includes a ribbed bolt-hammering-unit **1320** as described hereabove, wherein ribbed bolt-hammering-unit **1320,** is configured to facilitate the pecking by firing pin **1426** of the primer **826** of cartridge assembly **820,** and thereby initiate the firing and detonation sequences, as described here above.

Bolt assembly **1390** is coupled to operate with a barrel unit **1340** using another example usage of a unidirectional energy transfer mechanism, according to aspects of the present disclosure. Firearm **1300** is configured to fire bullet **822** of a recoilless-cartridge-assembly **1400,** as described here above. However, being a blow-forward type firearm and having a recoilless-cartridge-assembly **1400** disposed in its cartridge-chamber **1342,** firearm **1300** is configured to activate the firing sequence when moving the barrel unit **1340** of firearm **1300** backwards, in direction 1335. It should be appreciated that mechanisms for moving the barrel unit **1340** of firearm **1300** backwards using a biasing element, such as a spring, are well known in the art.

Bolt assembly **1390** further includes a piped limiter **1392** that is engaged to move linearly with respect to barrel unit **1340,** upon a bearing mechanism **1398.** Situated at a forward section of piped limiter **1392.** Piped limiter **1392** is configured to allow insertion of a recoilless-cartridge-assembly **1400** into the cartridge-chamber of firearm **1300.** Piped limiter **1392** is further configured to accommodate ribbed bolt-hammering-unit **1320.** Piped limiter **1392** further includes, at the rear end of piped limiter **1392,** bolt-stoppers **1394,** preventing ribbed bolt-hammering-unit **1320** from escaping piped limiter **1392,** when moving backwards.

When barrel unit **1340** of firearm **1300** moves backwards, in direction **1335,** bearing mechanism **1398** allows free linear motion of piped limiter **1392** with respect to barrel unit **1340** . As recoilless-cartridge-assembly **1400** meets ribbed bolt-hammering-unit **1320,** wherein barrel unit **1340,** recoilless-cartridge-assembly **1400** and ribbed bolt-hammering-unit **1320** continue to move backwards until ribbed bolt-hammering-unit **1320** is stopped by bolt-stoppers **1394.** While

Next, as barrel unit **1340** continuous to push backwards, directing ribs **1330** meet the sloped rear ends **1434** of the respective peripheral segment **1432,** causing recoilless-cartridge-assembly **1400** to pivot until each of the directing ribs **1330** meet and enter the respective slit **1436,** and recoilless-cartridge-assembly **1400** continues to move backwards until meeting the end of the respective wing **1424.** At this point, recoilless-cartridge-assembly **1400** continues to move backwards, however, the ends of the wing **1424** remain stuck at the front-end-face **1329** (see Fig. 12) of ribbed bolt-hammering-unit **1320.** Therefore, primer **826** of cartridge assembly **820** continuous to move towards firing pin **1420** until pin **1426** pecks primer **826,** as illustrated in a partial cross section view of Fig. 15b, and the firing and detonation **(828)** sequences begin.

At this stage, the propellant gasses formed at the detonation **(828)** also push cartridge casing **824** in direction **1335,** along with detonation assembly **1410.** The ends of wings **1424** are deformed or broken, and cartridge casing **824,** firing pin **1420** and detonation assembly **1410** proceed to move backwards, wherein slit **1436** slide over the respective directing ribs **1330** and then through opening **1324** (see Fig. 14) of ribbed bolt-hammering-unit **1320,** until completely ejecting out of firearm **1300.**

It should be noted that motion limiters, including linear motion limiters and rotational motion limiters may take a variety of forms, as known in the art.

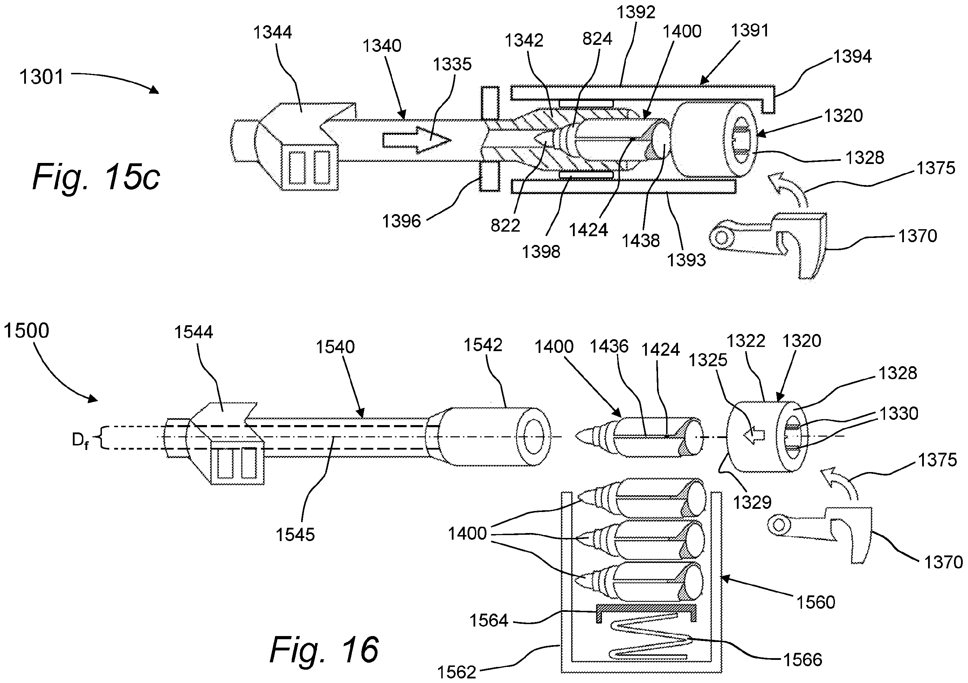

Reference is now also made to Fig. 15c that illustrates a blow-forward type firearm **1301** that includes a barrel unit **1340** and a bolt assembly **1391,** according to other aspects of the present disclosure. Firearm **1301** is quite similar to firearm **1300,** except that when moving the barrel unit **1340** of firearm **1300** backwards, firearm **1300** goes to a cocked state, while the recoilless cartridge assembly **1400** and the ribbed bolt-hammering unit **1320** rotate one with respect to the other, until reaching a cocked position and ready to be fired. Then, an additional mechanism **1310,** as described with respect to Fig. 12, is activated to provide ribbed bolt-hammering-unit **1320** with a forward thrust by a hammer **1370.** In this example embodiment, piped limiter **1392** is adapted to allow hammer **1370** to hit ribbed bolt-hammering-unit **1320.** In this example embodiment, bolt assembly **1390** further includes barrel stopper **1396** to block barrel unit **1340** from impacting pin **1426** of firing pin **1420,** while moving backwards.

According to aspects of the present disclosure, there is provided an example firearm system **1500,** as illustrated in Fig. 16, that utilizes the methodology of firearm assembly and methodology **1310** using recoilless-cartridge-assembly **1400.** Firearm system **1500** includes a barrel **1540** having an inner-barrel-diameter and a cartridge-chamber **1542,** at least one recoilless-cartridge-assembly **1400** and a piped bolt-hammering-unit **1320.**

Optionally, firearm system **1500** further includes a magazine **1560,** adapted to hold a number of recoilless-cartridge-assemblies **1400,** for automatic and semi-automatic firearms. In such embodiments, and other embodiments, respective multiple disposable firing pins **1420.** Firearm system **1500** can further include a ribbed bolt-hammering unit **1320** that is used as a part of the feeding mechanism that operatively interacts with magazine **1560.** Ribbed bolt-hammering unit **1320** extracts a recoilless-cartridge-assembly **1400,** that is next in line, from magazine **1560** and loads the extracted recoilless-cartridge-assembly **1400** into cartridge-chamber **1542** of barrel **1540.**

Upon the extracted recoilless-cartridge-assembly **1400** entering into chamber **1542,** the ribbed bolt-hammering-unit **1320** continues to move forward towards recoilless-cartridge-assembly **1400,** and thereby directing ribs **1330** meet the sloped rear ends **1434** of the respective peripheral segment **1432,** causing recoilless-cartridge-assembly **1400** to pivot until each of the directing ribs **1330** meet and enter the respective slit **1436,** and then continue and meet the ends of wing **1424,** via the front-end-face **1329** of ribbed bolt-hammering-unit **1320.** Upon cartridge **820,** being blocked inside the cartridge-chamber **1542,** ribbed bolt-hammering-unit **1320** continuous the move forward, pushing firing pin **1420** forward towards primer **826** of cartridge assembly **820,** until reaching their cocked position within predefined safety distance of the firing pin **1420** from the primer **826,** resting in the cocked position, being in a cocked state, ready to be fired.

When firearm system **1500** is triggered, a hammer mechanism, for example mechanism **1370** hammers the rear face **1328** of ribbed bolt-hammering-unit **1320** that thereby moves forward, to direction **1325,** according to the methodology described with respect to methodology **1310** (see Fig. 12). The hammering energy is then transferred to firing pin **1420,wherein** the tip of firing pin **1426** pecks the primer **826** of cartridge assembly **820,** and the firing sequence begins, including the bending of wings **1424** of firing pin **1420** and including both firing pin **1420** and bullet casing **824,** that absorb the energy of the recoil are flown out through the inner opening **1324** of ribbed bolt-hammering-unit **1320,** out of the rear of firearm system **1500.**

It should be appreciated that firearms **1200, 1300** (and **1301),** and **1500** are preconfigured to the have primary cartridge **520** generate a recoil force **525** (*Fₚ*) that is higher than the counter resistance (*Fᵣ*) formed by weight of the bullet casing **824** the weight of firing pin **1420** (and **910)** and the resistance to deform/brake of pin-wing(s) **916, 1256** and **1424,** such that: *ΔF = Fₚ, - Fᵣ.* Hence, similar to muzzle-brakes **640** and **740,** the difference in these forces *ΔF* is compensated using an additional recoil compensation element - a muzzle-brake **1244, 1344,** and **1544,** respectively.

It should be further appreciated that the resistance of pin-wing(s) to deform/brake, can be predesigned by selecting preconfigured materials for the various parts of the respective firing-pin. Hence, when applying an excess force (*Fₑ*) onto the pin-wing(s) **(916, 1256** and **1424),** the pin-wing(s) deforms or breaks.

The invention being thus described in terms of several embodiments and examples, it will be obvious that the same may be varied in many ways. Such variations are not to be regarded as a departure from the scope of the invention, as defined by the appended claims, and all such modifications as would be obvious to one skilled in the art.

## Claims

1. A recoilless firearm apparatus for firing at least one bullet of a respective standard cartridge having a standard caliber, comprising:
a) a front barrel (782) having an inner-barrel-diameter and a rear cartridge-chamber having a rear cartridge-chamber diameter configured to receive the standard cartridge;
b) a disposable firing activator; and
c) a rear discharge opening formed behind said front barrel, aligned with the longitudinal axis of said front barrel;
wherein the standard cartridge further includes a casing (724) having an external diameter that is smaller than said rear cartridge-chamber diameter, wherein the casing encloses a sealed inner-casing space that contains gunpowder (502), and wherein the casing includes a primer (727); and
wherein upon activating the primer, the primer explodes to thereby detonate the gunpowder, forming propellant gasses inside the cartridge that are directed both forward and backward as follows:
a) forward: firing of the bullet via said front barrel; and
b) backward: pushing, by a recoil force *Fₚ,* the casing, being a counterweight to the bullet, to thereby eject the casing from the firearm apparatus via said rear discharge opening.

2. The recoilless firearm apparatus of claim 1, wherein said disposable firing activator is an electric contact configured to transfer electric power from a side located electrode to the primer to thereby activate the primer, and wherein said disposable firing activator is ejected with the casing from the firearm apparatus via said rear discharge opening.

3. The recoilless firearm apparatus of claim 1, wherein said disposable firing activator is a firing pin, wherein said activating of the primer is performed by said firing pin hitting the primer, and wherein said disposable firing pin is ejected with the casing from the firearm apparatus via said rear discharge opening.

4. The recoilless firearm apparatus of claim 3, wherein said disposable firing-pin comprises:
a) a pin-body having a body having a pin-front-end, being an open end, and a pin-rear-end;
b) a pin disposed at said pin-front-end; and
c) at least one pin-wing disposed at said pin-rear-end,
wherein when in a cocked state, said standard cartridge rear is seated inside said cartridge-chamber and said pin is positioned in safe proximity to the primer;
wherein said firing pin is made of rigid materials; and
wherein the parts of said firing-pin, including said at least one pin-wing, are made of deformable or breakable materials, such that when applying an excess force *Fₑ* onto said at least one pin-wing, said at least one pin-wing deforms or breaks; or
wherein said disposable firing-pin comprises:
a) a pin-body having a body having a pin-front-end, being an open end, a frontal-body-section and a rear-body-section having a pin-rear-end with a larger diameter end; and
b) a pin disposed at said pin-front-end,
wherein said larger diameter of said pin-rear-end is configured to seal said rear discharge opening;
wherein when in a cocked state, said standard cartridge rear is seated inside said cartridge-chamber and said pin is positioned in safe proximity to the primer;
wherein said firing pin is made of rigid materials; and
wherein at least said rear-body-section, including said larger diameter end, is made of deformable or breakable materials, such that when applying an excess force *Fₑ* onto said firing pin, said firing pin deforms or breaks.

5. The recoilless firearm apparatus of any one of claim 4, further comprising a piped bolt-hammering-unit, having a bolt-front-face and a bolt-rear-face, and comprises a body having a bolt-inner-opening formed there within,
wherein said bolt-inner-opening is larger than the external diameter of the casing, allowing free longitudinal motion of the casing there inside;
wherein said pin-wings have a wing-span that is larger than said bolt-inner-opening;
wherein when the firearm is in a cocked state, said bolt-front-face is positioned in safe proximity to said pin-wings; and
wherein said activating of the primer is performed by applying a unidirectional forward force on said piped bolt-hammering-unit that pushes forward said disposable firing pin and, thereby, said pin activates of the primer.

6. The recoilless firearm apparatus as in any one of claims 1-5, further comprises a recoil-prevention mechanism, wherein said recoil-prevention mechanism comprises:
a) a rear barrel having said rear discharge opening; and
b) a dual-cartridge firearm magazine, configured to receive said standard cartridge, and a counterweight having a primer activator,
wherein said standard cartridge and said counterweight are arranged in a back-to-back configuration;
wherein said primer activator is operatively placed between said primer of said primary cartridge and said counterweight, such that said primer activator is aligned with said primer of said primary cartridge;
wherein the bullet of said primary cartridge is configured to be fired via said front barrel and said casing and said counterweight is configured to be fired via said rear barrel; and wherein upon detonation of said primary cartridge, the generated recoil force pushes the casing and said counterweight rearwardly, to thereby eject the casing and said counterweight from the firearm apparatus via said rear discharge opening.

7. A hovering firearm system comprising:
a) a hovering subsystem configured to lift a recoilless firearm apparatus as in any one of claims 1-6 to the air and fly towards a designated target; and
b) a mounting platform,
wherein said recoilless firearm is securely attached to said mounting platform; and
wherein upon firing said at least one bullet, the remaining residual recoil force allows the hovering firearm system to continue a controlled flight.

8. The hovering firearm system of claim 7, wherein said platform comprises a first gimbal having a carrying face, and wherein said recoilless firearm apparatus is mounted on said first gimbal.

9. The hovering firearm system of claim 7, further comprises an electro-optical module having a camera, wherein said camera has an optical line of sight aimed to the target.

10. The hovering firearm system of claim 9, wherein said electro-optical module is attached to said first gimbal; or
wherein the hovering firearm system further comprises a second gimbal, wherein said electro-optical module is attached to said second gimbal,
preferably wherein said second gimbal is independent of said first gimbal orwherein said second gimbal is mounted on said first gimbal.

11. The hovering firearm system of any one of claims 9-10, wherein said optical line of sight is controllably aligned with said recoilless firearm to thereby facilitate sequential shootings at the target without losing said boresight,
preferably wherein said aligning of said optical line of sight boresight (boresighting) is either mechanical alignment or electronic boresighting utilizing shift or image crosser motion, in particular wherein said boresighting comprises locking of said line of sight on the target, and controllably aligning the longitudinal axis of said front barrel with said optical line of sight of said camera, or.
wherein said boresighting is updated in real-time using ballistic calculations, wind vector calculations or a combination thereof.

12. A recoilless firearm apparatus for bidirectional recoilless firing at least one bullet of a respective standard cartridge having a standard caliber, comprising:
a) a front barrel having an inner-barrel-diameter and a rear cartridge-chamber having a rear cartridge-chamber diameter configured to receive the standard cartridge;
b) a disposable firing activator;
c) a recoil-prevention mechanism comprising:
i. a rear barrel having said rear discharge opening; and
ii. a dual-cartridge firearm magazine, configured to receive said standard cartridge, being a primary cartridge (520), secondary cartridge (530), and a dual firing pin unit (514) having a primary pin and a secondary pin, wherein said secondary cartridge includes a secondary sealed casing, including:
A. gunpowder (503); and
B. a secondary primer (536),
wherein said primary cartridge and said secondary cartridge are arranged in a back-to-back configuration;
wherein said dual firing pin unit is operatively placed between said primer of said primary cartridge and said secondary primer, such that said primary pin is aligned with said primer of said primary cartridge and said secondary pin is aligned with said secondary primer;
wherein the bullet of said primary cartridge is configured to be fired via said front barrel and said secondary cartridge is configured to be fired via said rear barrel; and wherein upon simultaneous detonation of said primary cartridge and said secondary cartridge, the recoil force
generated by said secondary cartridge cancels the recoil force generated by said primary cartridge.

13. The recoilless firearm apparatus of claim 12,
wherein said primary cartridge and said secondary cartridge are of identical type; wherein said front barrel and said rear barrel are not equal in length; and
wherein upon simultaneous detonation of said primary cartridge and, the recoil force generated by said secondary cartridge cancels the recoil force generated by said primary cartridge; or
wherein said primary cartridge and said secondary cartridge are not of identical type; wherein said front barrel and said rear barrel are not equal in length;
wherein upon simultaneous detonation of said primary cartridge, the recoil force generated by said secondary cartridge cancels the recoil force generated by said primary cartridge; and wherein said recoil-prevention mechanism further comprises a recoil compensator, to thereby compensate for inequalities between the recoil forces generated by said primary cartridge and said secondary cartridge.

14. A recoilless-cartridge-assembly comprising:
a) a standard cartridge; and
b) a detonation assembly (1410) comprising:
i. a cylindrical-envelope (1430) having an inner diameter, an external diameter, a front end and a rear end, wherein the front end operatively faces a front barrel;
ii. a rear plug (1438), wherein said rear plug securely encloses said inner diameter of said rear end of said cylindrical-envelope; and
iii. a disposable firing pin (1420) comprising:
A. a pin-body (1422);
B. at least one wing (1424) having a wing-span diameter, wherein said wing-span diameter is larger than said inner diameter of said cylindrical-envelope; and
C. a pin (1426),
wherein at least one through slit (1436) is formed in said cylindrical-envelope, one said slit for each said respective wing;
wherein each said slit extends from said front end of said cylindrical-envelope to said rear end of said cylindrical-envelope; and
wherein said slits segment said cylindrical-envelope into separate peripheral segments.

15. The recoilless-cartridge-assembly of claim 14,
wherein the rear end of each said peripheral segment is sloped, starting at a first rear corner at of each said peripheral segments, and ending at the other corner of that peripheral segment and at a predesigned distance from the rear end of said rear plug, and wherein said corner is formed by said sloped peripheral segment and a bank of the respective slit;
wherein, when said detonation assembly is operatively assembled, each said slit accommodates the open end of a respective said wing; and
wherein, when said recoilless-cartridge-assembly is operatively assembled, said detonation assembly embraces said primary casing of said primary cartridge unit, .
preferably wherein the rear end of each of said sloped peripheral segment include two slopes, each leading towards a respective neighboring slit.

## Patentansprüche

1. Rückstoßfreie Schusswaffenvorrichtung zum Abfeuern mindestens eines Geschosses einer jeweiligen Standardpatrone mit einem Standardkaliber, umfassend:
a) einen vorderen Lauf (782) mit einem inneren Laufdurchmesser und einer hinteren Patronenkammer mit einem hinteren Patronenkammerdurchmesser, die dazu ausgelegt ist, die Standardpatrone aufzunehmen;
b) einen Einweg-Auslöseaktivator; und
c) eine hintere Auswurföffnung, die hinter dem vorderen Lauf ausgebildet und auf die Längsachse des vorderen Laufs ausgerichtet ist;
wobei die Standardpatrone ferner eine Hülse (724) mit einem Außendurchmesser aufweist, der kleiner als der hintere Patronenkammerdurchmesser ist, wobei die Hülse einen abgedichteten Hülseninnenraum umschließt, der Schießpulver (502) enthält, und wobei die Hülse einen Zünder (727) aufweist; und
wobei beim Aktivieren des Zünders der Zünder explodiert, um dadurch das Schießpulver zu zünden, wodurch Treibgase innerhalb der Patrone entstehen, die wie folgt sowohl nach vorne als auch nach hinten gerichtet sind:
a) nach vorne: Abfeuern des Geschosses über den vorderen Lauf; und
b) nach hinten: Schieben der Hülse, die ein Gegengewicht zu dem Geschoss darstellt, durch eine Rückstoßkraft *Fₚ,* um dadurch die Hülse über die hintere Auswurföffnung aus der Schusswaffenvorrichtung auszustoßen.

2. Rückstoßfreie Schusswaffenvorrichtung nach Anspruch 1, wobei der Einweg-Auslöseaktivator ein elektrischer Kontakt ist, der dazu ausgelegt ist, elektrische Energie von einer seitlich angeordneten Elektrode zu dem Zünder zu übertragen, um dadurch den Zünder zu aktivieren, und wobei der Einweg-Auslöseaktivator zusammen mit der Hülse aus der Schusswaffenvorrichtung über die hintere Auswurföffnung ausgestoßen wird.

3. Rückstoßfreie Schusswaffenvorrichtung nach Anspruch 1, wobei der Einweg-Auslöseaktivator ein Schlagbolzen ist, wobei die Aktivierung des Zünders durch den Schlagbolzen erfolgt, der den Zünder trifft, und wobei der Einweg-Schlagbolzen zusammen mit der Hülse aus der Schusswaffenvorrichtung über die hintere Auswurföffnung ausgestoßen wird.

4. Rückstoßfreie Schusswaffenvorrichtung nach Anspruch 3, wobei der Einweg-Schlagbolzen Folgendes umfasst:
a) einen Bolzenkörper mit einem Körper, der ein vorderes Bolzenende hat, das ein offenes Ende ist, und einem hinteren Bolzenende;
b) einen Bolzen, der an dem vorderen Bolzenende angeordnet ist; und
c) mindestens einen Bolzenflügel, der an dem hinteren Bolzenende angeordnet ist,
wobei, wenn sich die Vorrichtung im gespannten Zustand befindet, das hintere Ende der Standardpatrone in der Patronenkammer sitzt und der Bolzen in sicherer Nähe zum Zünder positioniert ist;
wobei der Schlagbolzen aus starren Materialien hergestellt ist; und
wobei die Teile des Schlagbolzens, einschließlich mindestens eines Bolzenflügels, aus verformbaren oder bruchfähigen Materialien bestehen, sodass, wenn eine übermäßige Kraft *Fₑ* auf mindestens einen Bolzenflügel ausgeübt wird, mindestens ein Bolzenflügel sich verformt oder bricht; oder
wobei der Einweg-Schlagbolzen Folgendes umfasst:
a) einen Bolzenkörper mit einem Körper, der ein vorderes Bolzenende, das ein offenes Ende ist, einen vorderen Körperabschnitt und einen hinteren Körperabschnitt mit einem hinteren Bolzenende hat, das ein größeres Durchmesserende hat; und
b) einen Bolzen, der an dem vorderen Bolzenende angeordnet ist,
wobei das größere Durchmesserende des hinteren Bolzenendes dazu ausgelegt ist, die hintere Auswurföffnung zu verschließen;
wobei, wenn sich die Vorrichtung im gespannten Zustand befindet, das hintere Ende der Standardpatrone in der Patronenkammer sitzt und der Bolzen in sicherer Nähe zum Zünder positioniert ist;
wobei der Schlagbolzen aus starren Materialien hergestellt ist; und
wobei mindestens der hintere Körperabschnitt, einschließlich des größeren Durchmesserendes, aus verformbaren oder bruchfähigen Materialien besteht, sodass, wenn eine übermäßige Kraft *Fₑ* auf den Schlagbolzen ausgeübt wird, der Schlagbolzen sich verformt oder bricht.

5. Rückstoßfreie Schusswaffenvorrichtung nach Anspruch 4, ferner umfassend eine rohrförmige Bolzenschlageinheit mit einer Bolzenvorderseite und einer Bolzenrückseite, und umfassend einen Körper mit einer darin ausgebildeten Bolzeninnenöffnung,
wobei die Bolzeninnenöffnung größer als der Außendurchmesser der Hülse ist, wodurch eine freie Längsbewegung der Hülse darin ermöglicht wird;
wobei die Bolzenflügel eine Flügelspanne haben, die größer als die Bolzeninnenöffnung ist;
wobei, wenn sich die Schusswaffe im gespannten Zustand befindet, die Bolzenvorderseite in sicherer Nähe zu den Bolzenflügeln positioniert ist; und
wobei die Aktivierung des Zünders durch Ausüben einer unidirektionalen Vorwärtskraft auf die rohrförmige Bolzenschlageinheit erfolgt, die den Einweg-Schlagbolzen nach vorne drückt und dadurch der Bolzen den Zünder aktiviert.

6. Rückstoßfreie Schusswaffenvorrichtung nach einem der Ansprüche 1-5, ferner umfassend einen Rückstoßverhinderungsmechanismus, wobei der Rückstoßverhinderungsmechanismus Folgendes umfasst:
a) einen hinteren Lauf mit der hinteren Auswurföffnung; und
b) ein Doppelpatronen-Schusswaffenmagazin, das dazu ausgelegt ist, die Standardpatrone und ein Gegengewicht mit einem Zünderaktivator aufzunehmen,
wobei die Standardpatrone und das Gegengewicht in einer Rücken-an-Rücken-Konfiguration angeordnet sind;
wobei der Zünderaktivator betriebsfähig zwischen dem Zünder der Primärpatrone und dem Gegengewicht platziert ist, sodass der Zünderaktivator mit dem Zünder der Primärpatrone ausgerichtet ist;
wobei das Geschoss der Primärpatrone dazu ausgelegt ist, über den vorderen Lauf abgefeuert zu werden, und die Hülse und das Gegengewicht dazu ausgelegt sind, über den hinteren Lauf abgefeuert zu werden; und
wobei bei der Zündung der Primärpatrone die erzeugte Rückstoßkraft die Hülse und das Gegengewicht nach hinten drückt, um dadurch die Hülse und das Gegengewicht über die hintere Auswurföffnung aus der Schusswaffenvorrichtung auszustoßen.

7. Schwebendes Schusswaffensystem, umfassend:
a) ein schwebendes Teilsystem, das dazu ausgelegt ist, eine rückstoßfreie Schusswaffenvorrichtung nach einem der Ansprüche 1-6 in die Luft zu heben und zu einem festgelegten Ziel zu fliegen; und
b) eine Montageplattform,
wobei die rückstoßfreie Schusswaffe sicher an der Montageplattform befestigt ist; und
wobei beim Abfeuern mindestens eines Geschosses die verbleibende Restrückstoßkraft es dem schwebenden Schusswaffensystem ermöglicht, einen kontrollierten Flug fortzusetzen.

8. Schwebendes Schusswaffensystem nach Anspruch 7, wobei die Plattform einen ersten Kardanrahmen mit einer Tragfläche umfasst, und wobei die rückstoßfreie Schusswaffenvorrichtung an dem ersten Kardanrahmen montiert ist.

9. Schwebendes Schusswaffensystem nach Anspruch 7, ferner umfassend ein elektrooptisches Modul mit einer Kamera, wobei die Kamera eine optische Sichtlinie aufweist, die auf das Ziel gerichtet ist.

10. Schwebendes Schusswaffensystem nach Anspruch 9, wobei das elektrooptische Modul an dem ersten Kardanrahmen angebracht ist; oder
wobei das schwebende Schusswaffensystem ferner einen zweiten Kardanrahmen umfasst, wobei das elektrooptische Modul an dem zweiten Kardanrahmen angebracht ist,
vorzugsweise wobei der zweite Kardanrahmen unabhängig von dem ersten Kardanrahmen ist oder wobei der zweite Kardanrahmen auf dem ersten Kardanrahmen montiert ist.

11. Schwebendes Schusswaffensystem nach einem der Ansprüche 9-10, wobei die optische Sichtlinie kontrollierbar mit der rückstoßfreien Schusswaffe ausgerichtet ist, um dadurch sequentielle Schüsse auf das Ziel zu ermöglichen, ohne die Visierlinie zu verlieren, vorzugsweise wobei das Ausrichten der optischen Sichtlinie-Visierlinie (Boresighting) entweder eine mechanische Ausrichtung oder ein elektronisches Boresighting unter Verwendung einer Verschiebung oder einer Bildkreuzbewegung ist, insbesondere wobei das Boresighting das Verriegeln der Sichtlinie auf dem Ziel und das steuerbare Ausrichten der Längsachse des vorderen Laufs mit der optischen Sichtlinie der Kamera umfasst, oder
wobei das Boresighting in Echtzeit unter Verwendung ballistischer Berechnungen, Windvektorberechnungen oder einer Kombination davon aktualisiert wird.

12. Rückstoßfreie Schusswaffenvorrichtung zum bidirektionalen rückstoßfreien Abfeuern mindestens eines Geschosses einer jeweiligen Standardpatrone mit einem Standardkaliber, umfassend:
a) einen vorderen Lauf mit einem inneren Laufdurchmesser und einer hinteren Patronenkammer mit einem hinteren Patronenkammerdurchmesser, die dazu ausgelegt ist, die Standardpatrone aufzunehmen;
b) einen Einweg-Auslöseaktivator;
c) einen Rückstoßverhinderungsmechanismus, umfassend:
i. einen hinteren Lauf mit der hinteren Auswurföffnung; und
ii. ein Doppelpatronen-Schusswaffenmagazin, das dazu ausgelegt ist, die Standardpatrone aufzunehmen, die eine Primärpatrone (520), eine Sekundärpatrone (530) und eine Doppelschlagbolzeneinheit (514) mit einem Primärbolzen und einem Sekundärbolzen ist, wobei die Sekundärpatrone eine sekundäre versiegelte Hülse beinhaltet, die Folgendes beinhaltet:
A. Schießpulver (503); und
B. einen Sekundärzünder (536),
wobei die Primärpatrone und die Sekundärpatrone in einer Rücken-an-Rücken-Konfiguration angeordnet sind;
wobei die Doppelschlagbolzeneinheit betriebsfähig zwischen dem Zünder der Primärpatrone und dem Sekundärzünder platziert ist, sodass der Primärbolzen mit dem Zünder der Primärpatrone ausgerichtet ist und der Sekundärbolzen mit dem Sekundärzünder ausgerichtet ist; wobei das Geschoss der Primärpatrone dazu ausgelegt ist, über den vorderen Lauf abgefeuert zu werden, und die Sekundärpatrone dazu ausgelegt ist, über den hinteren Lauf abgefeuert zu werden; und
wobei bei gleichzeitiger Zündung der Primärpatrone und der Sekundärpatrone die durch die Sekundärpatrone erzeugte Rückstoßkraft die durch die Primärpatrone erzeugte Rückstoßkraft aufhebt.

13. Rückstoßfreie Schusswaffenvorrichtung nach Anspruch 12,
wobei die Primärpatrone und die Sekundärpatrone vom gleichen Typ sind;
wobei der vordere Lauf und der hintere Lauf nicht gleich lang sind; und
wobei bei gleichzeitiger Zündung der Primärpatrone die durch die Sekundärpatrone erzeugte Rückstoßkraft die durch die Primärpatrone erzeugte Rückstoßkraft aufhebt; oder
wobei die Primärpatrone und die Sekundärpatrone nicht vom gleichen Typ sind;
wobei der vordere Lauf und der hintere Lauf nicht gleich lang sind;
wobei bei gleichzeitiger Zündung der Primärpatrone die durch die Sekundärpatrone erzeugte Rückstoßkraft die durch die Primärpatrone erzeugte Rückstoßkraft aufhebt; und
wobei der Rückstoßverhinderungsmechanismus ferner einen Rückstoßkompensator umfasst, um dadurch Ungleichheiten zwischen den durch die Primärpatrone und die Sekundärpatrone erzeugten Rückstoßkräften auszugleichen.

14. Rückstoßfreie Patronenanordnung, umfassend:
a) eine Standardpatrone; und
b) eine Detonationsanordnung (1410), umfassend:
i. eine zylindrische Hülle (1430) mit einem Innendurchmesser, einem Außendurchmesser, einem vorderen Ende und einem hinteren Ende, wobei das vordere Ende betriebsfähig einem vorderen Lauf zugewandt ist;
ii. einen hinteren Stopfen (1438), wobei der hintere Stopfen den Innendurchmesser des hinteren Endes der zylindrischen Hülle sicher umschließt; und
iii. einen Einweg-Schlagbolzen (1420), umfassend:
A. einen Bolzenkörper (1422);
B. mindestens einen Flügel (1424) mit einem Flügelspannendurchmesser, wobei der Flügelspannendurchmesser größer als der Innendurchmesser der zylindrischen Hülle ist; und
C. einen Bolzen (1426),
wobei mindestens ein Durchgangsschlitz (1436) in der zylindrischen Hülle ausgebildet ist, wobei ein Schlitz für jeden jeweiligen Flügel ausgebildet ist;
wobei sich jeder Schlitz von dem vorderen Ende der zylindrischen Hülle zu dem hinteren Ende der zylindrischen Hülle erstreckt; und
wobei die Schlitze die zylindrische Hülle in separate Umfangssegmente segmentieren.

15. Rückstoßfreie Patronenanordnung nach Anspruch 14,
wobei das hintere Ende jedes Umfangssegments abgeschrägt ist, beginnend an einer ersten hinteren Ecke jedes Umfangssegments und endend an der anderen Ecke dieses Umfangssegments in einem vorbestimmten Abstand vom hinteren Ende des hinteren Stopfens, und wobei diese Ecke durch das abgeschrägte Umfangssegment und eine Flanke des jeweiligen Schlitzes gebildet wird;
wobei, wenn die Zündanordnung betriebsfähig zusammengebaut ist, jeder Schlitz das offene Ende eines jeweiligen Flügels aufnimmt; und
wobei, wenn die rückstoßfreie Patronenanordnung betriebsfähig zusammengebaut ist, die Detonationsanordnung die Primärhülse der Primärpatroneneinheit umschließt,
vorzugsweise wobei das hintere Ende jedes abgeschrägten Umfangssegments zwei Schrägen aufweist, die jeweils zu einem angrenzenden Schlitz führen.

## Revendications

1. Appareil d'arme à feu sans recul pour tirer au moins une balle d'une cartouche standard respective ayant un calibre standard, comprenant :
a) un canon avant (782) ayant un diamètre de canon intérieur et une chambre à cartouche arrière ayant un diamètre de chambre à cartouche arrière conçu pour recevoir la cartouche standard ;
b) un activateur de mise à feu jetable ; et
c) une ouverture de décharge arrière formée derrière ledit canon avant, alignée sur l'axe longitudinal dudit canon avant ;
la cartouche standard comprenant en outre une douille (724) ayant un diamètre extérieur qui est inférieur audit diamètre de chambre à cartouche arrière, la douille renfermant un espace de douille intérieur scellé qui contient de la poudre à canon (502), et la douille comprenant une amorce (727) ; et
lors de l'activation de l'amorce, l'amorce explosant pour faire détoner la poudre à canon, formant des gaz propulseurs à l'intérieur de la cartouche qui sont dirigés à la fois vers l'avant et vers l'arrière de la manière suivante :
a) vers l'avant : tir de la balle par l'intermédiaire dudit canon avant ; et
b) vers l'arrière : poussée, par une force de recul *Fₚ,* de la douille, qui constitue un contrepoids à la balle, ce qui permet d'éjecter la douille de l'appareil d'arme à feu par l'intermédiaire de ladite ouverture de décharge arrière.

2. Appareil d'arme à feu sans recul selon la revendication 1, ledit activateur de mise à feu jetable étant un contact électrique conçu pour transférer l'énergie électrique d'une électrode située sur le côté à l'amorce ce qui permet d'activer l'amorce, et ledit activateur de mise à feu jetable étant éjecté avec la douille de l'appareil d'arme à feu par l'intermédiaire de ladite ouverture de décharge arrière.

3. Appareil d'arme à feu sans recul selon la revendication 1, ledit activateur de mise à feu jetable étant un percuteur, ladite activation de l'amorce étant réalisée par ledit percuteur qui frappe l'amorce, et ledit percuteur jetable étant éjecté avec la douille de l'appareil d'arme à feu par l'intermédiaire de ladite ouverture de décharge arrière.

4. Appareil d'arme à feu sans recul selon la revendication 3, ledit percuteur jetable comprenant :
a) un corps de percuteur ayant un corps doté d'une extrémité avant de percuteur, qui est une extrémité ouverte, et d'une extrémité arrière de percuteur ;
b) un percuteur disposé au niveau de ladite extrémité avant de percuteur ; et
c) au moins une aile de percuteur disposée au niveau de l'extrémité arrière de percuteur,
à l'état armé, l'arrière de cartouche standard étant placé à l'intérieur de ladite chambre à cartouche et ledit percuteur étant positionné à proximité sûre de l'amorce ;
ledit percuteur étant constitué de matériaux rigides ; et
les parties dudit percuteur, y compris ladite au moins une aile de percuteur, étant constituées de matériaux déformables ou cassables, de sorte qu'en appliquant une force excessive *Fₑ* sur ladite au moins une aile de percuteur, ladite au moins une aile de percuteur se déforme ou se casse ; ou
ledit percuteur jetable comprenant :
a) un corps de percuteur ayant un corps doté d'une extrémité avant de percuteur, qui est une extrémité ouverte, d'une section de corps frontale et d'une section de corps arrière ayant une extrémité arrière de percuteur avec une extrémité de plus grand diamètre ; et
b) une tige disposée au niveau de ladite extrémité avant de percuteur,
ledit plus grand diamètre de ladite extrémité arrière de percuteur étant conçu pour sceller ladite ouverture de décharge arrière ;
à l'état armé, l'arrière de cartouche standard étant placé à l'intérieur de ladite chambre à cartouche et ledit percuteur étant positionné à proximité sûre de l'amorce ;
ledit percuteur étant constitué de matériaux rigides ; et
au moins ladite section arrière de corps, y compris ladite extrémité de plus grand diamètre, étant faite de matériaux déformables ou cassables, de sorte qu'en appliquant une force excessive *Fₑ* sur ledit percuteur, ledit percuteur se déforme ou se casse.

5. Appareil d'arme à feu sans recul selon la revendication 4, comprenant en outre une unité de frappe de culasse tubulaire, ayant une face avant de culasse et une face arrière de culasse, et comprenant un corps doté d'une ouverture intérieure de culasse formée en son sein, ladite ouverture intérieure de culasse étant plus grande que le diamètre extérieur de la douille, ce qui permet un mouvement longitudinal libre de la douille à l'intérieur ;
lesdites ailes de percuteur ayant une envergure d'aile qui est plus grande que ladite ouverture intérieure de culasse ;
lorsque l'arme à feu est à l'état armé, ladite face avant de culasse étant positionnée à proximité sûre desdites ailes de percuteur ; et
ladite activation de l'amorce étant réalisée par l'application d'une force unidirectionnelle vers l'avant sur l'unité de frappe de culasse canalisée qui pousse vers l'avant ledit percuteur jetable et, par conséquent, ledit percuteur activant l'amorce.

6. Appareil d'arme à feu sans recul selon l'une quelconque des revendications 1 à 5, comprenant en outre un mécanisme de prévention de recul, ledit mécanisme de prévention de recul comprenant :
a) un canon arrière doté de ladite ouverture de décharge arrière ; et
b) un magasin d'arme à feu à deux cartouches, conçu pour recevoir ladite cartouche standard, et un contrepoids doté d'un activateur d'amorce,
ladite cartouche standard et ledit contrepoids étant disposés dans une configuration dos à dos ;
ledit activateur d'amorce étant placé fonctionnellement entre ladite amorce de ladite cartouche primaire et ledit contrepoids, de sorte que ledit activateur d'amorce soit aligné avec ladite amorce de ladite cartouche primaire ; la balle de ladite cartouche primaire étant conçue pour être tirée par l'intermédiaire dudit canon avant et ladite douille et ledit contrepoids étant conçus pour être tirés par l'intermédiaire dudit canon arrière ; et lors de la détonation de ladite cartouche primaire, la force de recul générée poussant la douille et ledit contrepoids vers l'arrière, pour ainsi éjecter la douille et ledit contrepoids de l'appareil d'arme à feu par l'intermédiaire de ladite ouverture de décharge arrière.

7. Système d'arme à feu en vol stationnaire comprenant :
a) un sous-système de vol stationnaire conçu pour élever une arme à feu sans recul selon l'une quelconque des revendications 1 à 6 et voler vers une cible désignée ; et
b) une plate-forme de montage,
l'arme à feu sans recul étant solidement fixée à la plate-forme de montage ; et
après avoir tiré ladite au moins une balle, la force de recul résiduelle restante permettant au système d'arme à feu en vol stationnaire de poursuivre un vol commandé.

8. Système d'arme à feu en vol stationnaire selon la revendication 7, ladite plate-forme comprenant un premier cardan ayant une face de transport, et ledit appareil d'arme à feu sans recul étant monté sur ledit premier cardan.

9. Système d'arme à feu en vol stationnaire selon la revendication 7 comprenant en outre un module électro-optique doté d'une caméra, ladite caméra ayant une ligne de visée optique orientée vers la cible.

10. Système d'arme à feu en vol stationnaire selon la revendication 9, ledit module électro-optique étant fixé audit premier cardan ; ou
le système d'arme à feu en vol stationnaire comprenant en outre un second cardan, ledit module électro-optique étant fixé audit second cardan,
de préférence, ledit second cardan étant indépendant dudit premier cardan ou ledit second cardan étant monté sur ledit premier cardan.

11. Système d'arme à feu en vol stationnaire selon l'une quelconque des revendications 9 à 10, ladite ligne de visée optique étant alignée de manière apte à être commandée avec ladite arme à feu sans recul afin de permettre des tirs séquentiels sur la cible sans perdre ladite visée,
de préférence, ledit alignement de ladite ligne de visée optique sur la cible (visée) étant soit un alignement mécanique, soit une visée électronique utilisant un décalage ou un mouvement à croisement d'images, en particulier ladite visée comprenant le verrouillage de ladite ligne de visée sur la cible et l'alignement apte à être commandé de l'axe longitudinal dudit canon avant sur ladite ligne de visée optique de ladite caméra, ou ladite visée étant mise à jour en temps réel à l'aide de calculs balistiques, de calculs du vecteur vent ou d'une combinaison de ceux-ci.

12. Appareil d'arme à feu sans recul pour tirer sans recul bidirectionnel au moins une balle d'une cartouche standard respective ayant un calibre standard, comprenant :
a) un canon avant ayant un diamètre de canon intérieur et une chambre à cartouche arrière ayant un diamètre de chambre à cartouche arrière conçu pour recevoir la cartouche standard ;
b) un activateur de mise à feu jetable ;
c) un mécanisme de prévention de recul comprenant :
i. un canon arrière doté de ladite ouverture de décharge arrière ; et
ii. un magasin d'arme à feu à deux cartouches, conçu pour recevoir ladite cartouche standard, qui est une cartouche primaire (520), une cartouche secondaire (530) et une unité à percuteur double (514) ayant un percuteur primaire et un percuteur secondaire, ladite cartouche secondaire comprenant une douille scellée secondaire, comprenant :
A. de la poudre à canon (503) ; et
B. une amorce secondaire (536),
ladite cartouche primaire et ladite cartouche secondaire étant dans une configuration dos à dos ;
ladite unité à percuteur double étant placée fonctionnellement entre ladite amorce de ladite cartouche primaire et ladite amorce secondaire, de sorte que ledit percuteur primaire soit aligné sur ladite amorce de ladite cartouche primaire et ledit percuteur secondaire soit aligné sur ladite amorce secondaire ;
la balle de ladite cartouche primaire étant conçue pour être tirée par l'intermédiaire dudit canon avant et ladite cartouche secondaire étant conçue pour être tirée par l'intermédiaire dudit canon arrière ; et
lors de la détonation simultanée de ladite cartouche primaire et de ladite cartouche secondaire, la force de recul générée par ladite cartouche secondaire annulant la force de recul générée par ladite cartouche primaire.

13. Appareil d'arme à feu sans recul selon la revendication 12,
ladite cartouche primaire et ladite cartouche secondaire étant d'un type identique ;
ledit canon avant et ledit canon arrière n'étant pas de longueur égale ; et
lors de la détonation simultanée de ladite cartouche primaire, la force de recul générée par ladite cartouche secondaire annulant la force de recul générée par ladite cartouche primaire ; ou
ladite cartouche primaire et ladite cartouche secondaire n'étant pas d'un type identique ;
ledit canon avant et ledit canon arrière n'étant pas de longueur égale ;
lors de la détonation simultanée de ladite cartouche primaire, la force de recul générée par ladite cartouche secondaire annulant la force de recul générée par ladite cartouche primaire ; et
ledit mécanisme de prévention de recul comprenant en outre un compensateur de recul, pour ainsi compenser les inégalités entre les forces de recul générées par ladite cartouche primaire et ladite cartouche secondaire.

14. Ensemble cartouche sans recul comprenant :
a) une cartouche standard ; et
b) un ensemble de détonation (1410) comprenant :
i. une enveloppe cylindrique (1430) ayant un diamètre intérieur, un diamètre extérieur, une extrémité avant et une extrémité arrière, l'extrémité avant faisant fonctionnellement face à un canon avant ;
ii. un bouchon arrière (1438), ledit bouchon arrière enfermant de façon sûre ledit diamètre intérieur de ladite extrémité arrière de ladite enveloppe cylindrique ; et
iii. un percuteur jetable (1420) comprenant :
A. un corps de percuteur (1422) ;
B. au moins une aile (1424) ayant un diamètre d'envergure d'aile, ledit diamètre d'envergure d'aile étant supérieur audit diamètre intérieur de ladite enveloppe cylindrique ; et
C. une tige (1426),
au moins une fente traversante (1436) étant formée dans ladite enveloppe cylindrique, ladite une fente pour chacune desdites ailes respectives ;
chacune desdites fentes s'étendant de ladite extrémité avant de ladite enveloppe cylindrique à ladite extrémité arrière de ladite enveloppe cylindrique ; et
lesdites fentes segmentant ladite enveloppe cylindrique en segments périphériques distincts.

15. Ensemble cartouche sans recul selon la revendication 14,
l'extrémité arrière de chacun desdits segments périphériques étant inclinée, commençant au niveau d'un premier coin arrière de chacun desdits segments périphériques et se terminant au niveau de l'autre coin de ce segment périphérique et à une distance prédéfinie de l'extrémité arrière dudit bouchon arrière, et ledit coin étant formé par ledit segment périphérique incliné et une rive de la fente respective ;
lorsque ledit ensemble de détonation est fonctionnellement assemblé, chacune desdites fentes accueillant l'extrémité ouverte de ladite une aile respective ; et
lorsque ledit ensemble cartouche sans recul est fonctionnellement assemblé, ledit ensemble de détonation englobant ladite douille primaire de ladite unité de cartouche primaire,
de préférence, l'extrémité arrière de chacun desdits segments périphériques inclinés comprenant deux pentes, chacune menant vers une fente voisine respective.
